# EUROPEAN PATENT APPLICATION

(11) **EP 4 631 917 A1**
(43) Date of publication of application: **15.10.2025**
(21) Application number: 24850226.2
(22) Date of filing: 18.11.2024
(51) Int. Cl.: C02F 1/42

(54) **WATER SOFTENER**

(30) Priority: 29.02.2024 CN 202410230775; 29.02.2024 CN 202420388160 U
(71) Applicant: Foshan Shunde Midea Water Dispenser Mfg Co., Ltd., Foshan, Guangdong 528311 (CN); Midea Group Co., Ltd., Foshan, Guangdong 528311 (CN)
(72) Inventor: ZHANG, Ye, Foshan, Guangdong 528311 (CN); XIN, Jun, Foshan, Guangdong 528311 (CN); HE, Futian, Foshan, Guangdong 528311 (CN); LIU, Huachun, Foshan, Guangdong 528311 (CN); ZHU, Yunbo, Foshan, Guangdong 528311 (CN); PENG, Jing, Foshan, Guangdong 528311 (CN); LIAO, Yumin, Foshan, Guangdong 528311 (CN); LI, Zhonghua, Foshan, Guangdong 528311 (CN); LIU, Xiaowen, Foshan, Guangdong 528311 (CN); GOU, Jian, Foshan, Guangdong 528311 (CN)
(74) Representative: Ran, Handong
(86) International application number: PCT/CN2024/132749
(87) International publication number: WO 2025/179972

(57) **Abstract**

The present invention relates to the field of water treatment device, and provides a water softener, including a soft water valve, a transit connection assembly, a water path assembly and a resin tank. The soft water valve includes a valve body, a valve core assembly, a driving portion and a transmission mechanism, where both the valve core assembly and the driving portion are provided inside the valve body, the driving portion is connected to the valve core assembly through the transmission mechanism in a transmission manner; the transit connection assembly communicates with the soft water valve and is located alongside the soft water valve, the transit connection assembly is provided with a wastewater discharge water path, and the driving portion is configured to drive the transmission mechanism to control opening of the wastewater discharge water path; the water path assembly communicates with the transit connection assembly, and the water path assembly is configured to guide flow of a water path; and the resin tank is configured to soften water flowing through. In the present invention, the drive device drives the transmission mechanism to move, the transmission mechanism may control the valve core to switch water paths, and may also control the opening of the channel in the transit connection assembly, thereby realizing the control of the entire water path, simplifying the control logic, improving the control efficiency, reducing the quantity of control components, and reducing the failure rate of the water path control assembly.

## Description

### CROSS-REFERENCES TO RELATED APPLICATIONS

The present invention claims priority to Chinese patent application No. 202410230775.1 filed on February 29, 2024, entitled "Water Softener", and to Chinese patent application No. 202420388160.7 filed on February 29, 2024, entitled "Water Softener", which are hereby incorporated by reference in their entireties.

### FIELD

The present invention relates to the field of water treatment device, and in particular, to a water path control assembly and a water softener.

### BACKGROUND

A water softener is one of the devices used for water treatment. A main working principle of water softener is that, by using a water softener, water flows through resin particles, and the resin particles adsorb hardness ions in the water and release an equal amount of sodium ions. The resin particles gradually become saturated over time and need to be regenerated. During the regeneration process, salt water passes through the resin particles, washes away the adsorbed hardness ions, and restores the resin to a state where it may continue to be used.

In the related art, a control system of a water softener valve requires multiple electrical control parts for control, and the entire control system has a complex structure, which increases a failure rate, and increases a difficulty of maintenance and repair costs. In the related art, the overall structure of the water softener is complex and occupies a large space.

### BRIEF SUMMARY

The present invention provides a water softener to solve the defects of the water path control assembly of the water softener in the related art with complex structure, complex control logic and high failure rate. The control logic is simplified, and the overall stability is improved.

The present invention further provides a water path control assembly and a water softener to solve the defects of the various components in the related art with unreasonable arrangement, which results in large overall space occupation and complex control logic. The overall space occupation is small, and the control logic is simplified.

The present invention provides a water softener, including:
a soft water valve including a valve body, a valve core assembly, a driving portion and a transmission mechanism, where both the valve core assembly and the driving portion are provided inside the valve body, the driving portion connected to the valve core assembly through the transmission mechanism in a transmission manner, the valve core assembly switching water paths under drive of the driving portion;
a transit connection assembly communicating with the soft water valve and located alongside the soft water valve, where the transit connection assembly is provided with a wastewater discharge water path, the transit connection assembly fitting with the transmission mechanism, the driving portion configured to drive the transmission mechanism to control opening of the wastewater discharge water path;
a water path assembly communicating with the transit connection assembly, the water path assembly configured to guide flow of a water path; and
a resin tank fixedly connected to the water path assembly, the resin tank configured to soften water flowing through the resin tank.

In some embodiments, a valve cavity is provided inside the valve body, the valve body is further provided with a water inlet pipe, a water outlet pipe, a tank inlet pipe and a tank outlet pipe, each communicating with the valve cavity.

In some embodiments, a valve seat is provided inside the valve cavity.

In some embodiments, the valve core assembly is provided at the valve seat and is located inside the valve cavity.

In some embodiments, the valve core assembly switches among a service position, a salt adsorption position, a bypass position, a backwash position and a water replenishment position with respect to the valve seat, and the valve core assembly and the valve seat form a service water path, a salt adsorption water path, a bypass water path, a backwash water path and a water replenishment water path.

In some embodiments, an outer peripheral wall of the valve seat and an inner peripheral wall of the valve cavity form a first water inlet cavity, a tank inlet cavity and a second water inlet cavity separated from each other are provided inside the valve seat, the tank inlet cavity communicates with the tank inlet pipe, the water inlet pipe communicates with both the first water inlet cavity and the second water inlet cavity.

In some embodiments, a bypass cavity is provided inside the valve seat, the bypass cavity communicates with the water outlet pipe, and the bypass cavity is separated from the second water inlet cavity.

In some embodiments, the water outlet pipe communicates with the tank outlet pipe via a bypass check valve, and the tank outlet pipe unidirectionally communicates with the water outlet pipe.

In some embodiments, a position where the bypass cavity communicates with the water outlet pipe is between the bypass check valve and an outlet of the water outlet pipe.

In some embodiments, a wastewater discharge control assembly is provided inside the transit connection assembly, the wastewater discharge control assembly is provided in the wastewater discharge water path, and the wastewater discharge control assembly is configured to control on and off of the wastewater discharge water path.

In some embodiments, the transmission mechanism includes:
a driving gear provided at an output end of the driving portion;
a driven gear meshing with the driving gear, where the driven gear is provided with at least one driving block, the driving block configured to fit with the wastewater discharge control assembly to open the wastewater discharge water path; and
a rotating shaft connected to the driven gear.

In some embodiments, the rotating shaft is connected to the valve core assembly to drive the valve core assembly to switch water paths.

In some embodiments, the valve core assembly includes a moving plate, which is fixedly connected to the rotating shaft.

In some embodiments, the rotating shaft drives the moving plate to rotate.

In some embodiments, the moving plate is provided at the valve seat, and the moving plate fits with the valve seat to form the service water path, the salt adsorption water path, the bypass water path, the backwash water path and the water replenishment water path.

In some embodiments, the moving plate is provided with a moving water inlet hole and a moving bypass hole which are separated from each other.

In some embodiments, at the service position, the first water inlet cavity and the second water inlet cavity communicate with the tank inlet cavity through the moving water inlet hole, and the first water inlet cavity, the second water inlet cavity, the moving water inlet hole and the tank inlet cavity form the service water path.

In some embodiments, at the bypass position, the first water inlet cavity and the second water inlet cavity communicate with the bypass cavity through the moving bypass hole, and the first water inlet cavity, the second water inlet cavity, the moving bypass hole and the bypass cavity form the bypass water path.

In some embodiments, a surface of the moving plate facing away from the valve seat is provided with a water inlet channel, an end of the water inlet channel communicates with the moving water inlet hole, and another end of the water inlet channel communicates with the first water inlet cavity.

In some embodiments, the water inlet channel communicates with the first water inlet cavity through multiple communication ports, and the multiple communication ports are spaced apart along a circumferential direction of the moving plate.

In some embodiments, the valve seat is provided with a salt adsorption cavity and a salt adsorption communication cavity separated from each other.

In some embodiments, the moving plate is provided with a move salt adsorption and water distribute hole, and the move salt adsorption and water distribute hole is provided at a surface of the moving plate facing the valve seat.

In some embodiments, the moving water inlet hole extends through the moving plate along a thickness direction of the moving plate, and the move salt adsorption and water distribute hole is separated from the moving water inlet hole.

In some embodiments, at the salt adsorption position, the moving water inlet hole communicates with the move salt adsorption and water distribute hole through the salt adsorption communication cavity, the move salt adsorption and water distribute hole communicates with the salt adsorption cavity and the bypass cavity respectively, the moving water inlet hole, the salt adsorption communication cavity, the move salt adsorption and water distribute hole and the salt adsorption cavity form the salt adsorption water path, and the moving water inlet hole, the salt adsorption communication cavity, the move salt adsorption and water distribute hole and the bypass cavity form the bypass water path.

In some embodiments, the wastewater discharge water path selectively communicates with the tank outlet pipe.

In some embodiments, the wastewater discharge water path communicates with the tank outlet pipe at the salt adsorption position.

In some embodiments, the salt adsorption cavity selectively communicates with a salt box.

In some embodiments, at the salt adsorption position: the salt adsorption cavity communicates with the salt box, and the soft water valve is in a salt adsorption mode; the salt adsorption cavity is disconnected from the salt box, and the soft water valve is in a slow wash mode.

In some embodiments, the water softener further includes a jet pipe, the jet pipe is connected to the valve body.

In some embodiments, the jet pipe communicates with the salt adsorption cavity.

In some embodiments, the valve seat is provided with a water replenishment cavity separated from the salt adsorption cavity.

In some embodiments, the water replenishment cavity communicates with a water replenishment pipe.

In some embodiments, a salt adsorption check valve is provided between the water replenishment pipe and the jet pipe.

In some embodiments, the salt adsorption check valve is unidirectionally communicated based on a pressure difference between the water replenishment pipe and the jet pipe.

In some embodiments, at the water replenishment position, the moving water inlet hole communicates with the water replenishment cavity and the salt adsorption cavity, the pressure difference between the water replenishment pipe and the jet pipe is zero, the salt adsorption cavity replenishes water into the salt box through the jet pipe, and the moving water inlet hole, the water replenishment cavity, the salt adsorption cavity, and the jet pipe form the water replenishment water path.

In some embodiments, the moving plate is provided with a moving backwash hole extending along a thickness direction of the moving plate.

In some embodiments, a backwash cavity is provided inside the valve seat.

In some embodiments, the valve body is provided with a backwash pipe.

In some embodiments, the backwash pipe communicates with the backwash cavity.

In some embodiments, at the backwash position, the backwash cavity communicates with the moving bypass hole, and the moving backwash hole communicates with the bypass cavity, to form the backwash water path.

In some embodiments, the valve core assembly further includes:
a fixed plate, where the fixed plate is attached to the valve seat.

In some embodiments, the moving plate is rotatable with respect to the fixed plate.

In some embodiments, the fixed plate is provided with a fixed bypass hole corresponding to and communicating with the bypass cavity.

In some embodiments, the moving plate fits with the fixed plate and the valve seat to form the service water path, the salt adsorption water path, the bypass water path, the backwash water path and the water replenishment water path.

In some embodiments, a seal washer is provided between the fixed plate and the valve seat, and the seal washer is the same as the fixed plate in shape.

In some embodiments, an inner wall of the valve cavity is provided with a first fixing portion, and a periphery of the fixed plate is provided with a second fixing portion.

In some embodiments, the second fixing portion is snapped with the first fixing portion to limit the fixed plate in a circumferential direction.

In some embodiments, one of the second fixing portion or the first fixing portion is a slot body, and another of the second fixing portion or the first fixing portion is a protrusion.

In some embodiments, the driving portion includes:
a driving motor, where the driving motor is fixedly connected to the valve body.

In some embodiments, an output end of the driving motor is fixedly connected to the driving gear.

In some embodiments, the valve body includes:
a valve body portion, where the valve cavity is provided inside the valve body portion, a side of the valve cavity being open; and
a valve plug cover, where the valve plug cover covers an open end of the valve cavity.

In some embodiments, the rotating shaft penetrates through the valve plug cover.

In some embodiments, the driven gear is located outside the valve cavity.

In some embodiments, the valve body further includes a control panel, and the control panel is sleeved at the rotating shaft.

In some embodiments, the control panel is located between the valve plug cover and the driven gear.

In some embodiments, the control panel is provided with a Hall sensor, the driven gear is provided with a magnetic member, and the Hall sensor is configured to sense a position of the magnetic member.

In some embodiments, the rotating shaft includes a vertical shaft and a connecting disk, an end of the vertical shaft is connected to the driving portion, and the connecting disk is provided at another end of the vertical shaft.

In some embodiments, the connecting disk is stacked with and fixedly connected to the moving plate.

In some embodiments, the connecting disk is provided with a first engaging portion, and the moving plate is provided with a second engaging portion fitting with the first engaging portion.

In some embodiments, one of the first engaging portion or the second engaging portion is a slot body, and another of the first engaging portion or the second engaging portion is a protrusion.

In some embodiments, the transit connection assembly further includes:
a transit connection integration seat, where a first flow path, a second flow path, a salt mixing flow path, a backwash flow path and a transit connection cavity are provided inside the transit connection integration seat, where an outer peripheral side of the transit connection integration seat corresponding to each flow path is provided with a transit connection port.

In some embodiments, an end of the first flow path communicates with the tank inlet pipe through the corresponding transit connection port, and another end of the first flow path communicates with a resin fill portion of the resin tank through the corresponding transit connection port.

In some embodiments, an end of the second flow path communicates with the tank outlet pipe through the corresponding transit connection port, an end of the salt mixing flow path communicates with the jet pipe, and an end of the backwash flow path communicates with the backwash pipe.

In some embodiments, another end of the second flow path, another end of the salt mixing flow path and another end of the backwash flow path all communicate with a center pipe of the resin tank through the transit connection cavity.

In some embodiments, the transit connection integration seat further includes a salt adsorption flow path, an end of the salt adsorption flow path communicates with the salt box, and another end of the salt adsorption flow path communicates with the salt mixing flow path.

In some embodiments, the salt adsorption flow path and the salt mixing flow path are connected at a front end of the transit connection cavity.

In some embodiments, the transit connection assembly further includes a jet injector, the jet injector is provided at a junction of the salt adsorption flow path and the salt mixing flow path, and the jet injector can adsorb salt water into the salt mixing flow path.

In some embodiments, the wastewater discharge water path is provided inside the transit connection integration seat.

In some embodiments, the wastewater discharge water path communicates with the resin fill portion of the resin tank through the first flow path.

In some embodiments, the wastewater discharge control assembly includes a wastewater discharge pressure rod.

In some embodiments, the wastewater discharge pressure rod is provided with an extrusion end and a fit seal end which are axially arranged.

In some embodiments, the extrusion end is located inside the driven gear and fittable with the driving block to be extruded.

In some embodiments, the fit seal end is located in the wastewater discharge water path.

In some embodiments, the extrusion end is configured to cause the fit seal end to move and open the wastewater discharge water path after being extruded.

In some embodiments, the transit connection assembly further includes a salt adsorption check valve, the salt adsorption check valve is provided inside the transit connection cavity and located at a terminal end of the salt mixing flow path.

In some embodiments, the water path assembly includes:
a main body, which is connected to the resin tank.

In some embodiments, the main body includes a first flow channel and a second flow channel.

In some embodiments, the resin tank is located below the first flow channel and the second flow channel.

In some embodiments, the first flow channel is provided with a first connecting end port for fluid input or fluid output, and the first flow path communicates with the resin fill portion in the resin tank through the first connecting end port.

In some embodiments, the second flow channel is provided with a second connecting end port for fluid input or fluid output, and the transit connection cavity communicates with the center pipe in the resin tank through the second connecting end port.

In some embodiments, the main body is connected to multiple resin tanks.

In some embodiments, the multiple resin tanks are provided in parallel and spaced apart along an extension direction of the first flow channel or an extension direction of the second flow channel, and both the first connecting end port and the second connecting end port are located at an identical resin tank.

In some embodiments, both the first connecting end port and the second connecting end port are provided with quick plug holes.

In some embodiments, a quick plug member is provided inside the quick plug hole.

In some embodiments, both the first connecting end port and the second connecting end port are connected to the transit connection assembly through the quick plug member.

In some embodiments, the resin tank is integrally formed with the water path assembly.

In some embodiments, the resin tank includes:
a tank body, where the tank body is provided with an accommodate cavity and a mount opening communicating with the accommodate cavity; and
a cover body, where the cover body covers the mount opening to connect the cover body and the tank body.

The present invention further provides a water softener, including:
a soft water valve including a valve body, a valve core assembly, a driving portion and a transmission mechanism, where both the valve core assembly and the driving portion are provided inside the valve body, the driving portion connected to the valve core assembly through the transmission mechanism in a transmission manner, the valve core assembly switching water paths under drive of the driving portion;
a transit connection assembly connected to the soft water valve and located alongside the soft water valve;
a water path assembly provided with a connect end port for fluid input or fluid output, the connect end port communicates with the transit connection assembly, and the water path assembly is configured to guide flow of a water path; and
a resin tank fixedly connected to the water path assembly, where the resin tank is configured to soften water flowing through the resin tank;
the water path assembly is provided with a first side and a second side opposite to each other, the soft water valve and the transit connection assembly are provided at the first side, and the resin tank is provided at the second side.

In some embodiments, the transit connection assembly is connected to the water path assembly through the connect end port.

In some embodiments, the connect end port is offset at an end of the first side, and a mount space is formed between the connect end port and another end of the first side.

In some embodiments, the soft water valve and the transit connection assembly are mounted inside the mount space.

In some embodiments, the connect end port includes a first connecting end port and a second connecting end port.

In some embodiments, the water path assembly includes:
a main body, where the main body includes a first flow channel and a second flow channel.

In some embodiments, the first connecting end port communicates with the first flow channel.

In some embodiments, the second connecting end port communicates with the second flow channel.

In some embodiments, the transit connection assembly communicates with a resin fill portion in the resin tank through the first connecting end port.

In some embodiments, the transit connection assembly communicates with a center pipe in the resin tank through the second connecting end port.

In some embodiments, the resin tank is located below the first flow channel and the second flow channel.

In some embodiments, the soft water valve and the transit connection assembly are located above the first flow channel and the second flow channel.

In some embodiments, both the first connecting end port and the second connecting end port are provided with quick plug holes.

In some embodiments, a quick plug member is provided inside the quick plug hole.

In some embodiments, both the first connecting end port and the second connecting end port are connected to the transit connection assembly through the quick plug member.

In some embodiments, the main body is connected to multiple resin tanks.

In some embodiments, the multiple resin tanks are provided in parallel and spaced apart along an extension direction of the first flow channel or an extension direction of the second flow channel.

In some embodiments, the connect end port is located at an identical resin tank.

In some embodiments, the resin tank includes:
a tank body, where an end of the tank body is fixedly connected to the main body, the tank body provided with an accommodate cavity and a mount opening communicating with the accommodate cavity; and
a cover body, where the cover body covers the mount opening to seal the tank body through the cover body.

In some embodiments, a valve cavity is provided inside the valve body.

In some embodiments, the valve body is provided with a water inlet pipe, a water outlet pipe, a tank inlet pipe and a tank outlet pipe, each communicating with the valve cavity.

In some embodiments, a valve seat is provided inside the valve cavity.

In some embodiments, the valve core assembly is provided at the valve seat and is located inside the valve cavity.

In some embodiments, the valve core assembly switches among a service position, a salt adsorption position, a bypass position, a backwash position and a water replenishment position with respect to the valve seat, and the valve core assembly and the valve seat form a service water path, a salt adsorption water path, a bypass water path, a backwash water path and a water replenishment water path.

In some embodiments, an outer peripheral wall of the valve seat and an inner peripheral wall of the valve cavity form a first water inlet cavity.

In some embodiments, the valve seat is provided with a tank inlet cavity and a second water inlet cavity separated from each other.

In some embodiments, the tank inlet cavity communicates with the tank inlet pipe.

In some embodiments, the water inlet pipe communicates with both the first water inlet cavity and the second water inlet cavity.

In some embodiments, the valve seat is provided with a bypass cavity, and the bypass cavity communicates with the water outlet pipe.

In some embodiments, the bypass cavity is separated from the second water inlet cavity.

In some embodiments, the water outlet pipe communicates with the tank outlet pipe via a bypass check valve, and the tank outlet pipe unidirectionally communicates with the water outlet pipe.

In some embodiments, a position where the bypass cavity communicates with the water outlet pipe is between the bypass check valve and an outlet of the water outlet pipe.

In some embodiments, a wastewater discharge control assembly and a wastewater discharge water path are provided inside the transit connection assembly.

In some embodiments, the wastewater discharge control assembly is provided in the wastewater discharge water path.

In some embodiments, the wastewater discharge control assembly is configured to control on and off of the wastewater discharge water path.

In some embodiments, the transmission mechanism includes:
a driving gear, which is provided at an output end of the driving portion;
a driven gear, which meshes with the driving gear, the driven gear is provided with at least one driving block, and the driving block is configured to fit with the wastewater discharge control assembly to open the wastewater discharge water path; and
a rotating shaft, which is connected to the driven gear.

In some embodiments, the rotating shaft is connected to the valve core assembly to drive the valve core assembly to switch water paths.

In some embodiments, the valve core assembly includes:
a moving plate, where the moving plate is fixedly connected to the rotating shaft.

In some embodiments, the rotating shaft drives the moving plate to rotate.

In some embodiments, the moving plate is provided at the valve seat.

In some embodiments, the moving plate fit with the valve seat to form the service water path, the salt adsorption water path, the bypass water path, the backwash water path and the water replenishment water path.

In some embodiments, the moving plate is provided with a moving water inlet hole and a moving bypass hole which are separated from each other.

In some embodiments, at the service position, the first water inlet cavity and the second water inlet cavity communicate with the tank inlet cavity through the moving water inlet hole, and the first water inlet cavity, the second water inlet cavity, the moving water inlet hole and the tank inlet cavity form the service water path.

In some embodiments, at the bypass position, the first water inlet cavity and the second water inlet cavity communicate with the bypass cavity through the moving bypass hole, and the first water inlet cavity, the second water inlet cavity, the moving bypass hole and the bypass cavity form the bypass water path.

In some embodiments, a surface of the moving plate facing away from the valve seat is provided with a water inlet channel.

In some embodiments, an end of the water inlet channel communicates with the moving water inlet hole, and another end of the water inlet channel communicates with the first water inlet cavity.

In some embodiments, the water inlet channel communicates with the first water inlet cavity through multiple communication ports.

In some embodiments, the multiple communication ports are spaced apart along a circumferential direction of the moving plate.

In some embodiments, the valve seat is provided with a salt adsorption cavity and a salt adsorption communication cavity separated from each other.

In some embodiments, the moving plate is provided with a moving salt adsorption and water distribution hole.

In some embodiments, the moving salt adsorption and water distribution hole is provided at a surface of the moving plate facing the valve seat.

In some embodiments, the moving water inlet hole extends through the moving plate along a thickness direction of the moving plate.

In some embodiments, the moving salt adsorption and water distribution hole is separated from the moving water inlet hole.

In some embodiments, at the salt adsorption position, the moving water inlet hole communicates with the moving salt adsorption and water distribution hole through the salt adsorption communication cavity, the moving salt adsorption and water distribution hole communicates with the salt adsorption cavity and the bypass cavity respectively, the moving water inlet hole, the salt adsorption communication cavity, the moving salt adsorption and water distribution hole and the salt adsorption cavity form the salt adsorption water path, and the moving water inlet hole, the salt adsorption communication cavity, the moving salt adsorption and water distribution hole and the bypass cavity form the bypass water path.

In some embodiments, the wastewater discharge water path selectively communicates with the tank outlet pipe.

In some embodiments, the wastewater discharge water path communicates with the tank outlet pipe at the salt adsorption position.

In some embodiments, the salt adsorption cavity selectively communicates with a salt box.

In some embodiments, at the salt adsorption position: the salt adsorption cavity communicates with the salt box, and the soft water valve is in a salt adsorption mode; the salt adsorption cavity is disconnected from the salt box, and the soft water valve is in a slow wash mode.

In some embodiments, the water softener further includes a jet pipe, and the jet pipe is connected to the valve body.

In some embodiments, the jet pipe communicates with the salt adsorption cavity.

In some embodiments, the valve seat is provided with a water replenishment cavity separated from the salt adsorption cavity.

In some embodiments, the water replenishment cavity communicates with a water replenishment pipe.

In some embodiments, a salt adsorption check valve is provided between the water replenishment pipe and the jet pipe.

In some embodiments, the salt adsorption check valve unidirectionally communicates based on a pressure difference between the water replenishment pipe and the jet pipe.

In some embodiments, at the water replenishment position, the moving water inlet hole communicates with the water replenishment cavity and the salt adsorption cavity, the pressure difference between the water replenishment pipe and the jet pipe is zero, the salt adsorption cavity replenishes water into the salt box through the jet pipe, and the moving water inlet hole, the water replenishment cavity, the salt adsorption cavity, and the jet pipe form the water replenishment water path.

In some embodiments, the moving plate is provided with a moving backwash hole extending along a thickness direction of the moving plate.

In some embodiments, a backwash cavity is provided inside the valve seat.

In some embodiments, the valve body is provided with a backwash pipe.

In some embodiments, the backwash pipe communicates with the backwash cavity.

In some embodiments, at the backwash position, the backwash cavity communicates with the moving bypass hole, and the moving backwash hole communicates with the bypass cavity, to form the backwash water path.

In some embodiments, the valve core assembly further includes:
a fixed plate, where the fixed plate is attached to the valve seat.

In some embodiments, the moving plate is rotatable with respect to the fixed plate.

In some embodiments, the fixed plate is provided with a fixed bypass hole corresponding to and communicating with the bypass cavity.

In some embodiments, the moving plate fits with the fixed plate and the valve seat to form the service water path, the salt adsorption water path, the bypass water path, the backwash water path and the water replenishment water path.

In some embodiments, a seal washer is provided between the fixed plate and the valve seat.

In some embodiments, the seal washer is the same as the fixed plate in shape.

In some embodiments, an inner wall of the valve cavity is provided with a first fixing portion, a periphery of the fixed plate is provided with a second fixing portion.

In some embodiments, the second fixing portion is snapped with the first fixing portion to limit the fixed plate in a circumferential direction.

In some embodiments, one of the second fixing portion or the first fixing portion is a slot body, and another of the second fixing portion or the first fixing portion is a protrusion.

In some embodiments, the driving portion includes:
a driving motor, where the driving motor is fixedly connected to the valve body.

In some embodiments, an output end of the driving motor is fixedly connected to the driving gear.

In some embodiments, the valve body includes:
a valve body portion, where the valve cavity is provided inside the valve body portion, a side of the valve cavity being open; and
a valve plug cover, where the valve plug cover covers an open end of the valve cavity.

In some embodiments, the rotating shaft penetrates through the valve plug cover.

In some embodiments, the driven gear is located outside the valve cavity.

In some embodiments, the valve body further includes a control panel, and the control panel is sleeved at the rotating shaft.

In some embodiments, the control panel is located between the valve plug cover and the driven gear.

In some embodiments, the control panel is provided with a Hall sensor.

In some embodiments, the driven gear is provided with a magnetic member.

In some embodiments, the Hall sensor is configured to sense a position of the magnetic member.

In some embodiments, the rotating shaft includes a vertical shaft and a connecting disk.

In some embodiments, an end of the vertical shaft is connected to the driving portion, and the connecting disk is provided at another end of the vertical shaft.

In some embodiments, the connecting disk is stacked with and fixedly connected to the moving plate.

In some embodiments, the connecting disk is provided with a first engaging portion, and the moving plate is provided with a second engaging portion fitting with the first engaging portion.

In some embodiments, one of the first engaging portion or the second engaging portion is a slot body, and another of the first engaging portion or the second engaging portion is a protrusion.

In some embodiments, the transit connection assembly further includes:
a transit connection integration seat, where a first flow path, a second flow path, a salt mixing flow path, a backwash flow path and a transit connection cavity are provided inside the transit connection integration seat.

In some embodiments, an outer peripheral side of the transit connection integration seat corresponding to each flow path is provided with a transit connection port.

In some embodiments, an end of the first flow path communicates with the tank inlet pipe through the corresponding transit connection port, and another end of the first flow path communicates with the first connecting end port through the corresponding transit connection port.

In some embodiments, an end of the second flow path communicates with the tank outlet pipe through the corresponding transit connection port.

In some embodiments, an end of the salt mixing flow path communicates with the jet pipe.

In some embodiments, an end of the backwash flow path communicates with the backwash pipe.

In some embodiments, another end of the second flow path, another end of the salt mixing flow path and another end of the backwash flow path are all connected to the second connecting end port through the transit connection cavity.

In some embodiments, the wastewater discharge control assembly includes a wastewater discharge pressure rod.

In some embodiments, the wastewater discharge pressure rod is provided with an extrusion end and a fit seal end which are axially arranged.

In some embodiments, the extrusion end is located inside the driven gear and fittable with the driving block to be extruded.

In some embodiments, the fit seal end is located in the wastewater discharge water path.

In some embodiments, the extrusion end is configured to cause the fit seal end to move and open the wastewater discharge water path after being extruded.

In some embodiments, the transit connection integration seat further includes a salt adsorption flow path.

In some embodiments, an end of the salt adsorption flow path communicates with the salt box, another end of the salt adsorption flow path communicates with the salt mixing flow path.

In some embodiments, the salt adsorption flow path and the salt mixing flow path are connected at a front end of the transit connection cavity.

In some embodiments, the transit connection assembly further includes a jet injector, the jet injector is provided at a junction of the salt adsorption flow path and the salt mixing flow path, and the jet injector can adsorb salt water into the salt mixing flow path.

In some embodiments, the transit connection assembly further includes the salt adsorption check valve, and the salt adsorption check valve is provided inside the transit connection cavity and located at a terminal end of the salt mixing flow path.

According to any of the above embodiments, the present invention at least has the following beneficial effects:
in the water path control assembly provided by the present invention, the transmission mechanism is driven by a drive device; on one hand, the valve core may be controlled through the transmission mechanism to switch the water paths; on the other hand, the opening of the wastewater discharge water path in the transit connection assembly may be controlled by the fitting between the transmission mechanism and the transit connection assembly; and thus the entire water path is controlled, the control logic is simplified, the control efficiency is improved, the device arrangements are reduced, and the failure rate of the water path control assembly is reduced.

In the water path control assembly provided by the present invention, by providing both the valve assembly and the transit connection assembly above the flow channel assembly, the overall structure layout is above the flow channel assembly, which significantly reduces the space occupied by the water softener in the thickness direction, and makes the overall structure more compact.

### BRIEF DESCRIPTION OF THE DRAWINGS

In order to illustrate the solutions disclosed in the embodiments of the present invention or in the related art more clearly, the drawings used in the description of the embodiments or the related art are briefly described below. The drawings in the following description are only some embodiments of the present invention, and other drawings may be obtained according to these drawings without any creative work for those skilled in the art.
FIG. 1 is a schematic exploded view of an overall structure of a water softener provided by the present invention;
FIG. 2 is a schematic diagram of a connection structure of a soft water valve and a transit connection assembly in a water softener provided by the present invention;
FIG. 3 is a schematic diagram of an assembly structure of a wastewater discharge control assembly in a water softener provided by the present invention;
FIG. 4 is a schematic diagram of an overall structure of a soft water valve in a water softener provided by the present invention;
FIG. 5 is a schematic exploded view of a structure of a soft water valve in a water softener provided by the present invention;
FIG. 6 is a first schematic diagram of an internal structure of a valve body in a water softener provided by the present invention;
FIG. 7 is a second schematic diagram of an internal structure of a valve body in a water softener provided by the present invention;
FIG. 8 is a first schematic structural diagram of a fixed plate in a water softener provided by the present invention;
FIG. 9 is a second schematic structural diagram of a fixed plate in a water softener provided by the present invention;
FIG. 10 is a schematic structural diagram of a seal washer in a water softener provided by the present invention;
FIG. 11 is a first schematic structural diagram of a moving plate in a water softener provided by the present invention;
FIG. 12 is a second schematic structural diagram of a moving plate in a water softener provided by the present invention;
FIG. 13 is a first schematic structural diagram of a transit connection assembly in a water softener provided by the present invention;
FIG. 14 is a second schematic structural diagram of a transit connection assembly in a water softener provided by the present invention;
FIG. 15 is a third schematic structural diagram of a transit connection assembly in a water softener provided by the present invention;
FIG. 16 is a schematic diagram of an assembly structure of a connection between a water path assembly and a resin tank in a water softener provided by the present invention;
FIG. 17 is a schematic structural diagram of a top view of a connection between a water path assembly and a resin tank in a water softener provided by the present invention;
FIG. 18 is a schematic structural diagram of a cross-sectional view along an A-A direction in FIG. 17 provided by the present invention;
FIG. 19 is a schematic structural diagram of a water path flow direction of a valve body at a service position in a water softener provided by the present invention;
FIG. 20 is a schematic structural diagram of a water path flow direction of a moving plate at a service position in a water softener provided by the present invention;
FIG. 21 is a schematic structural diagram of a fit between a moving plate and a fixed plate at a service position in a water softener provided by the present invention;
FIG. 22 is a schematic diagram of a water path state at a service position in a water softener provided by the present invention;
FIG. 23 is a schematic diagram of a water path state of soft water at a bypass position in a water softener provided by the present invention;
FIG. 24 is a schematic diagram of a water path state at a bypass position in a water softener provided by the present invention;
FIG. 25 is a first schematic structural diagram of a water path flow direction of a valve body at a salt adsorption position in a water softener provided by the present invention;
FIG. 26 is a second schematic structural diagram of a water path flow direction of a valve body at a salt adsorption position in a water softener provided by the present invention;
FIG. 27 is a first schematic structural diagram of a water path flow direction of a moving plate at a salt adsorption position in a water softener provided by the present invention;
FIG. 28 is a schematic diagram of a water path where a moving plate fits with a fixed plate at a salt adsorption position in a water softener provided by the present invention;
FIG. 29 is a schematic diagram of a water path state at a salt adsorption position in a water softener provided by the present invention;
FIG. 30 is a schematic diagram of a water path state at a slow wash position in a water softener provided by the present invention;
FIG. 31 is a schematic structural diagram of a water path flow direction of a valve body at a backwash position in a water softener provided by the present invention;
FIG. 32 is a schematic structural diagram of a water path flow direction of a moving plate at a backwash position in a water softener provided by the present invention;
FIG. 33 is a schematic diagram of a water path where a moving plate fits with a fixed plate at a backwash position in a water softener provided by the present invention;
FIG. 34 is a schematic diagram of a water path state at a backwash position in a water softener provided by the present invention;
FIG. 35 is a schematic structural diagram of a water path flow direction of a valve body at a water replenishment position in a water softener provided by the present invention;
FIG. 36 is a schematic structural diagram of a water path flow direction of a moving plate at a water replenishment position in a water softener provided by the present invention;
FIG. 37 is a schematic diagram of a water path where a moving plate fits with a fixed plate at a water replenishment position in a water softener provided by the present invention;
FIG. 38 is a schematic diagram of a water path state at a water replenishment position in a water softener provided by the present invention;
FIG. 39 is a schematic structural diagram of a water path flow direction of a valve body at a water mix position in a water softener provided by the present invention;
FIG. 40 is a schematic structural diagram of a water path flow direction of a moving plate at a water mix position in a water softener provided by the present invention;
FIG. 41 is a schematic diagram of a water path where a moving plate fits with a fixed plate at a water mix position in a water softener provided by the present invention; and
FIG. 42 is a schematic diagram of water path state at a water mix position in a water softener provided by the present invention.

### Reference numerals:

100: soft water valve; 101: upper cover;
110: valve body; 111: valve cavity; 1111: first fixing portion; 112: water inlet pipe; 113: water outlet pipe; 114: tank inlet pipe; 115: tank outlet pipe; 116: valve seat; 117: accommodation slot; 118: valve plug cover; 119: control panel; 1191: Hall sensor;
130: first water inlet cavity; 131: tank inlet cavity; 132: second water inlet cavity; 133: bypass cavity; 134: salt adsorption cavity; 135: salt adsorption communication cavity; 136: backwash cavity; 137: bypass check valve;
140: valve core assembly;
141: transmission mechanism; 142: driving portion; 143: gear assembly; 1431: driven gear; 1432: driving gear; 1433: driving block;
150: rotating shaft; 151: vertical shaft; 152: connecting disk; 153: first engaging portion;
160: moving plate; 161: moving water inlet hole; 162: moving bypass hole; 163: water inlet channel; 164: communication port; 165: moving salt adsorption and water distribution hole; 166: moving backwash hole; 167: second engaging portion; 168: blind hole;
170: fixed plate; 171: fixed bypass hole; 172: second fixing portion; 173: fixed water inlet hole; 174: fixed tank inlet hole; 175: fixed salt adsorption hole; 176: fixed salt adsorption communication hole; 177: fixed backwash hole;
180: seal washer; 181: jet pipe; 182: backwash pipe; 183: flow meter;
200: transit connection assembly;
210: transit connection integration seat; 2101: first flow path; 2102: second flow path; 2103: salt mixing flow path; 2104: backwash flow path; 2105: transit connection cavity; 2106: salt adsorption flow path; 2107: wastewater discharge water path;
220: first transit connection head; 230: second transit connection head; 240: jet injector;
250: wastewater discharge control assembly; 251: wastewater discharge pressure rod; 2511: extrusion end; 2512: fit seal end; 260: salt adsorption check valve; 270: lever mechanism;
300: water path assembly; 301: main body;
310: first flow channel; 320: second flow channel; 330: first connecting end port; 340: second connecting end port; 350: first connecting port; 360: second connecting port;
400: resin tank; 410: center pipe; 420: resin fill portion; 430: cover body;
500: salt box.

### DETAILED DESCRIPTION

To illustrate the objectives, solutions and advantages of the present invention more clearly, the solutions in the embodiments of the present invention are described clearly and completely in conjunction with the accompanying drawings in the present invention. The described embodiments are part of the embodiments of the present invention, rather than all of the embodiments. All other embodiments obtained by those skilled in the art based on the embodiments of the present invention without any creative effort fall within the protection scope of the present invention.

In the description of the embodiments of the present invention, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present invention and simplifying the description, rather than indicating or implying that the device or component stated must have a particular orientation, is constructed and operated in a particular orientation, and thus is not to be construed as limiting the embodiments of the present invention. Moreover, the terms "first", "second", "third", and the like are only used for descriptive purposes and are not to be construed as indicating or implying relative importance.

In the description of the embodiments of the present invention, it should be noted that unless explicitly specified and defined otherwise, the terms "connected to" and "connected" shall be understood broadly, for example, it may be either fixedly connected or detachably connected, or can be integrated; it may be either mechanically connected, or electrically connected; it may be either directly connected, or indirectly connected through an intermediate medium. The specific meanings of the terms above in the present invention can be understood by a person skilled in the art in accordance with specific conditions.

In the embodiments of the present invention, unless otherwise clearly stated and defined, the first feature being located "on" or "under" the second feature can refer to that the first feature is in direct contact with the second feature or the first feature is in indirect contact with the second feature by an intervening media. In addition, the first feature being "on", "above" and "over" the second feature can refer to that the first feature is directly above or obliquely above the second feature, or simply refer to that the level height of the first feature is higher than that of the second feature. The first feature being "under", "below" and "beneath" the second feature can refer to that the first feature is directly below or obliquely below the second feature, or simply refer to that the level height of the first feature is lower than that of the second feature.

In the description of this specification, the description with reference to the terms "one embodiment", "some embodiments", "an example", "specific example", "some examples" and the like, refers to that specific features, structures, materials or characteristics described in combination with an embodiment or an example are included in at least one embodiment or example according to the embodiments of the present invention. In this specification, schematic representations of the above terms are not necessarily directed to a same embodiment or example. Furthermore, the particular features, structures, materials or characteristics described can be combined in any suitable manner in any one or more embodiments or examples. In addition, those skilled in the art may combine the different embodiments or examples described in this specification, as well as the features of the different embodiments or examples, without conflicting each other.

Hard water may have many effects on daily life and household device. For example, hard water may reduce the washing effect, cause accumulation in water pipes to reduce water flow, damage device performance and life, and cause skin problems. Therefore, people use water softening device to treat tap water in daily life. The use of water softening device may effectively remove minerals in hard water, improve water quality, and enhance the quality of life. Generally, the treatment principle of water softening device is to remove calcium and magnesium ions in water through a process of ion exchange, thereby converting hard water into soft water.

Treatment with resin is one of the commonly used methods. The resin is a polymer substance with a special structure and positive charges on its surface. When hard water passes through resin particles, the calcium and magnesium ions in the hard water are adsorbed onto the positive charges on the resin surface, and replace the original sodium ions on the resin. After a period of time, the resin particles are gradually saturated. In this case, it is necessary to clean the resin particles by sucking in salt water, and regenerate the resin particles by replacing the adsorbed ions.

In the related art, a water path is switched by a way of a control valve to realize various functions of the water softener, and the wastewater generated after the resin particles are cleaned is discharged through a separate wastewater discharge channel. That is, in the related art, the switching of water path and the opening of the wastewater discharge channel are controlled separately, which increases the complexity of the control system, increases the number of parts of the device, and increases the cost of production and preparation. In addition, the complex control system reduces the reliability of the overall device.

In the related art, in order to achieve the softening effect, the water softener is generally connected to a resin tank or a resin barrel. Since the water softener needs to be cleaned and regenerated, the overall structure is often complicated, which makes the overall components not conducive to being laid out, and makes the overall structure complicated and occupy a large space.

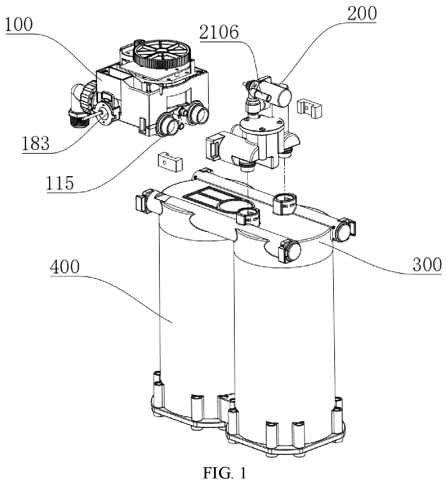

In response to the problems in the related art, referring to FIG. 1 to FIG. 3, the present invention provides a water softener. The water softener includes a soft water valve 100, a transit connection assembly 200, a water path assembly 300 and a resin tank 400. The soft water valve 100 includes a valve body 110, a valve core assembly 140, a driving portion 142 and a transmission mechanism 141. Both the valve core assembly 140 and the driving portion 142 are provided inside the valve body 110. The driving portion 142 is connected to a valve core through the transmission mechanism 141 in a transmission manner, and the valve core assembly 140 switches water paths under the drive of the driving portion 142. The transit connection assembly 200 communicates with the soft water valve 100 and is located alongside the soft water valve 100. The transit connection assembly 200 is provided with a wastewater discharge water path 2107, and the transit connection assembly 200 fits with the transmission mechanism 141. The driving portion 142 is configured to drive the transmission mechanism 141 to control opening of the wastewater discharge water path 2107. The water path assembly 300 communicates with the transit connection assembly 200, and the water path assembly 300 is configured to guide flow of a water path. The resin tank 400 is fixedly connected to the water path assembly 300, and the resin tank 400 is configured to soften water flowing through the resin tank 400. When the water softener is running, the water path flowing through the resin tank 400 has different flow directions when different functions are required. A water path, where water is input from a resin fill area at a top of the resin tank 400, flows upward through a center pipe 410 and then output, is specified as a forward circulation water path. A water path, where water is input from the center pipe 410, flows upward after flowing through a resin particle fill area, and then output, is specified as a reverse circulation water path. In the water softener, the reverse circulation water path is generally output through the wastewater discharge water path 2107. The wastewater discharge water path 2107 is closed under normal conditions and opened when wastewater discharge is required. In this embodiment, through the fit between the driving portion 142 and the transmission mechanism 141, on the one hand, the switching of each water path may be controlled, and on the other hand, while controlling the switching of each water path, the transit connection assembly 200 may be fitted to open the wastewater discharge water path 2107, which realizes the opening of each water path in the water softener and each function of the water softener, simplifies the control system of the water softener, and improves the stability of the control system.

In response to the problems in the related art, as shown in FIG. 1 to FIG. 3, the present invention further provides a water softener. The water softener includes a soft water valve 100, a transit connection assembly 200, a water path assembly 300 and a resin tank 400. The soft water valve 100 includes a valve body 110, a valve core assembly 140, a driving portion 142 and a transmission mechanism 141. Both the valve core assembly 140 and the driving portion 142 are provided inside the valve body 110. The driving portion 142 is connected to the valve core assembly 140 through the transmission mechanism 141 in a transmission manner, and the valve core assembly 140 switches water paths under drive of the driving portion 142. The transit connection assembly 200 is connected to soft water and located alongside the soft water valve 100. The water path assembly 300 communicates with the transit connection assembly 200, and the water path assembly 300 is configured to guide flow of a water path. The resin tank 400 is fixedly connected to the water path assembly 300, and the resin tank 400 is configured to soften water flowing through the resin tank 400. The water path assembly 300 is provided with a first side and a second side opposite to each other. The soft water valve 100 and the transit connection assembly 200 are provided at the first side, and the resin tank 400 is provided at the second side. Generally, since a water softener needs to have multiple flow channels for switching control of water paths, a relatively complex water path structure needs to be constructed, and more components for controlling water paths is required. A larger space needs to be designed to arrange the water path structure, which is not conducive to the layout of each component, and makes the overall space occupied by the water softener larger, especially in the thickness direction A of the water softener. In this embodiment, the soft water valve 100 and the transit connection assembly 200 are connected to a side of the water path assembly 300, another side of the water path assembly 300 is provided with the resin tank 400. The water softener is designed with a stacked layout along a vertical direction B as a whole, which significantly reduces the space occupied by the water softener, especially reduces the thickness of the water softener, and is convenient for transportation and mounting.

In an embodiment, the transit connection assembly 200 is connected to the soft water valve 100 and the water path assembly 300. The soft water valve 100 and the transit connection assembly 200 are located at the first side of the water path assembly 300, and the resin tank 400 is connected to the second side of the water path assembly 300. A layout structure stacked along the vertical direction B is formed. In the thickness direction A, the width of the water softener is only the width of the water path plate, which significantly reduces the space occupied by the water softener in the thickness direction A, as shown in Figure 1. Through the connection arrangement of the transit connection assembly 200, the occupied space of each component (soft water valve 100, water path assembly 300) is smaller, which is beneficial to the layout of the water softener, makes the overall structure more compact, and reduces the overall space occupied by the water softener.

According to an embodiment of the present invention, the first side of the water path assembly 300 is provided with a connect end port for fluid input or fluid output. The transit connection assembly 200 is connected to the water path assembly 300 through the connect end port. The connect end port is offset at an end of the first side, and a mount space is formed between the connect end port and another end of the first side. The soft water valve 100 and the transit connection assembly 200 are mounted inside the mount space. Space needs to be occupied when mounting the soft water valve 100 and the transit connection assembly 200. In this embodiment, by adjusting the position of the connect end port, the connect end port is located at one of the sides, which provides an avoidance space at the first side of the water path assembly 300. The avoidance space is used to mount the soft water valve 100 and the transit connection assembly 200, making the overall structure compact and reducing space occupancy.

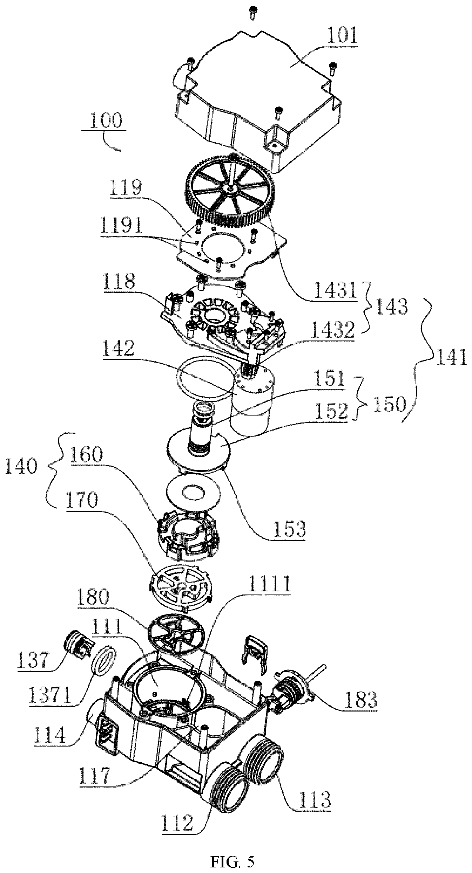

In a specific arrangement, as shown in FIG5, the transmission mechanism 141 is connected to the driving portion 142 in a transmission manner, and the driving portion 142 may drive the transmission mechanism 141 to rotate. The rotation of the transmission mechanism 141 may drive the valve core assembly 140 to rotate. When the valve core assembly 140 rotates to different positions, different water paths may be switched, and different functions of the water softener are achieved. For example, the transmission mechanism 141 is provided with corresponding fit components, when the transmission mechanism 141 rotates or moves to a set position, the fit components fit with corresponding components on the transit connection assembly 200, and the wastewater discharge water path 2107 is opened. While the different functions of the water softener are realized, the transmission mechanism 141 may fit with the transit connection assembly 200 to open the wastewater discharge water path 2107, which realizes that one driving portion 142 controls different functional positions of the water softener.

In an embodiment, in order to control the wastewater discharge water path 2107 in the related art, it is generally necessary to provide a separate control component and a corresponding control module for control to open the wastewater discharge water path 2107. The quantity of control components is large and the entire control system is complex. In this embodiment, the action of the valve core assembly 140 may be controlled by a transmission component, which realizes the switching of each water path. In the switching process of each water path, the transmission mechanism 141 may fit with the transit connection assembly 200, and the wastewater discharge water path 2107 may be opened by the fitting between the transmission mechanism 141 and the transit connection assembly 200. That is, the switching of water path and the controlling of the wastewater discharge water path 2107 are realized by the fitting between the driving portion 142 and the transmission mechanism 141, which reduces the quantity of control components, simplifies the control system and control logic, and improves the stability of the control system.

In a specific application, raw water is introduced via the soft water valve 100, and then enters the resin tank 400 through the transit connection assembly 200. The resin tank 400 is filled with resin particles and provided with a center pipe 410. The raw water is processed by the resin particles in the resin tank 400 and then output from the soft water valve 100 through the transit connection assembly 200. The flow direction of the water path in the resin tank 400 is controlled by the transit connection assembly 200. That is, the flow direction of the water path in the resin tank 400 is controlled by the fitting between the transmission mechanism 141 and the transit connection assembly 200, and the forward circulation water path and the reverse circulation water path flowing through the resin tank 400 are controlled.

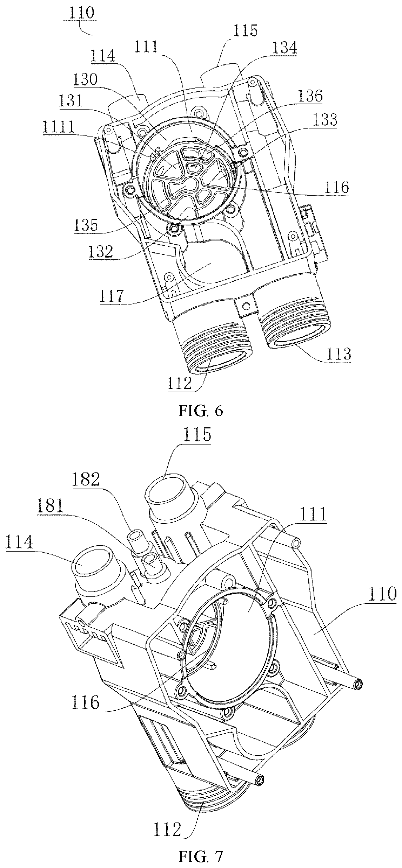

As shown in FIG. 6 and FIG. 7, according to an embodiment of the present invention, a valve cavity 111 is provided inside the valve body 110 of the soft water valve 100. The valve body 110 is provided with a water inlet pipe 112, a water outlet pipe 113, a tank inlet pipe 114 and a tank outlet pipe 115, each of them communicating with the valve cavity 111. A valve seat 116 is provided inside the valve cavity 111. The valve core assembly 140 is provided at the valve seat 116 and is located inside the valve cavity 111. The valve core assembly 140 switches among a service position, a salt adsorption position, a bypass position, a backwash position and a water replenishment position with respect to the valve seat 116, and the valve core assembly 140 and the valve seat 116 form a service water path, a salt adsorption water path, a bypass water path, a backwash water path and a water replenishment water path. In this embodiment, when the water softener is running, it mainly has the service position, the salt adsorption position, the bypass position, the backwash position and the water replenishment position, each of which corresponds to each water path, and different functions of the water softener are realized by controlling each water path.

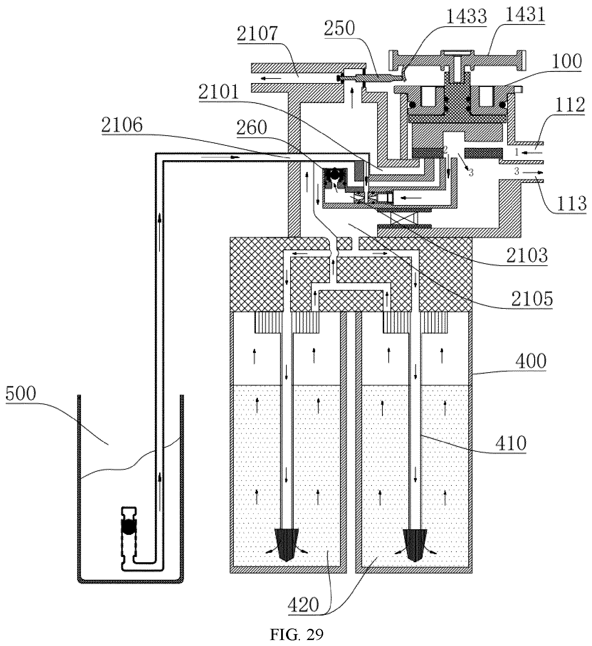

In a specific arrangement, the soft water valve 100 is configured to control the flow direction of water (including raw water, soft water, wastewater, etc.) in the water softener to achieve corresponding functions. As shown in FIG. 29, the water softener further includes a salt box 500. As mentioned above, the resin tank 400 is filled with resin particles, and the resin particles are used to adsorption metal ions such as calcium ion and magnesium ion in the raw water to reduce the hardness of the raw water. The resin tank 400 communicates with the soft water valve 100. Salt water is accommodated in the salt box 500, and the salt box 500 communicates with the soft water valve 100. The salt box 500 communicates with the resin tank 400 via the soft water valve 100. The salt box 500 is configured to provide salt water to the resin tank 400 to clean and restore the resin, so that the resin may continue to adsorb calcium and magnesium ions. The soft water valve 100 is configured to control the flow direction of water. For example, the soft water valve 100 may control the raw water to flow into the resin tank 400 for filtration to reduce the hardness of the water and form soft water.

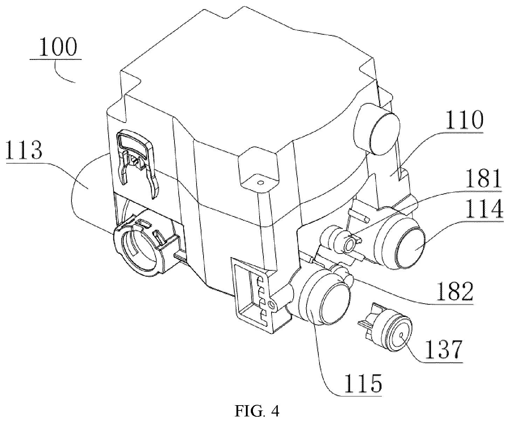

In an embodiment, as shown in FIG. 4 to FIG. 12, the water inlet pipe 112 is configured to communicate with a water source to provide raw water; the water outlet pipe 113 is configured to communicate with a user end to provide water to the user; the tank inlet pipe 114 is configured to communicate with an inlet of the resin tank 400, and the tank outlet pipe 115 is configured to communicate with an outlet of the resin tank 400. In the water softener in this embodiment, at a corresponding position, a corresponding water path is switched to a connected state to transport water to the corresponding position. As such, by rotating the valve core assembly 140 to a required position, the corresponding water path is switched to a connected state, and the flow direction of water in the water softener is controlled, which simplifies the control logic. In addition, the water paths in the water softener are controlled by the soft water valve 100, which improves the integration of the control structure of the water softener. In some embodiments, a cross-section of the valve cavity 111 is circular, the valve seat 116 is columnar, and the valve seat 116 is provided at a center of the valve cavity 111.

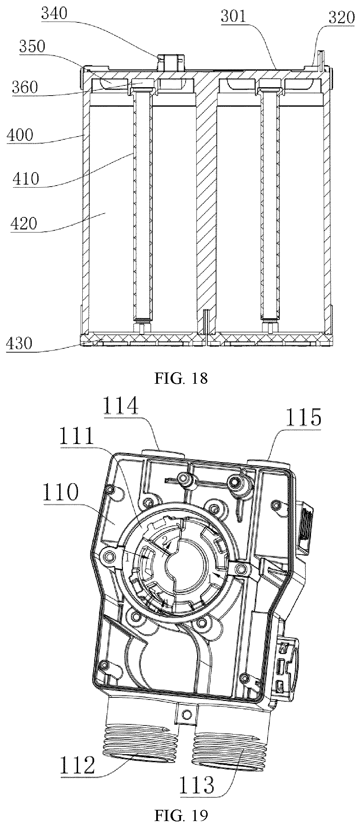

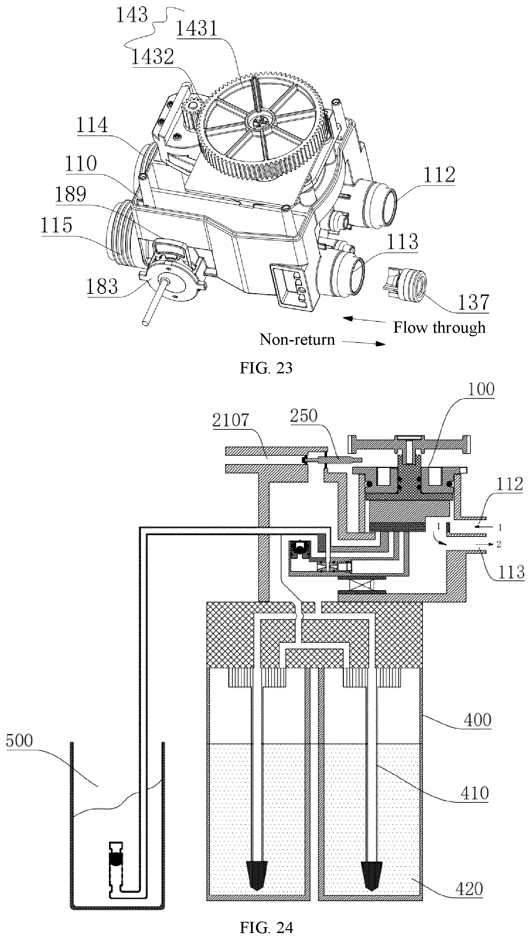

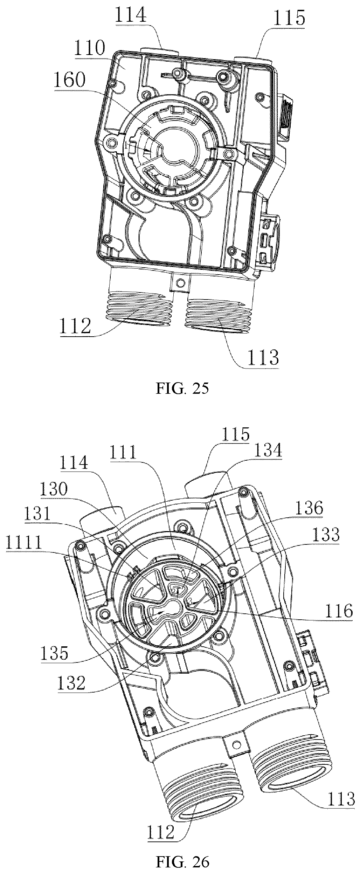

At the service position, as shown in FIG. 19 to FIG. 22, at least the service water path is in the connected state, the soft water valve 100 may transport raw water to the resin tank 400, and the resin particles may adsorb the calcium and magnesium ions in the raw water to produce soft water. At the salt adsorption position, as shown in FIG. 25 to FIG. 29, at least the salt adsorption water path is in the connected state, and the soft water valve 100 may transport the salt water in the salt box 500 to the resin tank 400, where the salt water is used to replace the calcium and magnesium ions adsorbed on the resin to restore the resin so that the resin may continue to adsorb calcium and magnesium ions. At the bypass position, as shown in FIG. 23 and FIG. 24, at least the bypass water path is in the connected state, and the soft water valve 100 may directly transport raw water to the user end. In an embodiment, the water demand of users is multifaceted, and the demand for water hardness is different in different scenarios.

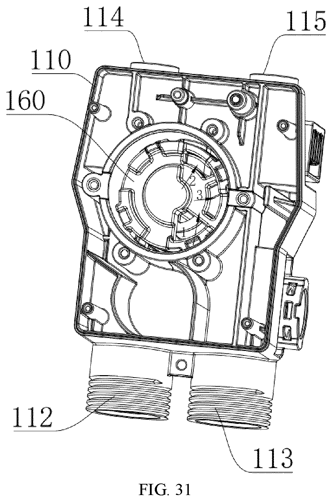

For example, when flushing a toilet, the influence of water hardness may be ignored, and the user may use raw water for flushing. In this case, the valve core assembly 140 is switched to the bypass position to provide raw water for flushing the toilet, which may reduce the resin filtering process and reduce the consumption of resin. At the backwash position, as shown in FIG. 31 to FIG. 34, at least the backwash water path is in the connected state, the soft water valve 100 transports water to the resin tank 400 to flush the resin, remove the broken resin, and increase the gap among the resin particles. After switching to the service position, the resin is fully in contact with the raw water to adsorb calcium and magnesium ions, which improves the filtering effect. At the water replenishment position, at least the water replenishment water path is in the connected state, and the soft water valve 100 is configured to transport water to the salt box 500 to replenish salt water.

In this embodiment, the valve core assembly 140 is driven to rotate by the driving portion 142 to switch among the service position, the salt adsorption position, the bypass position, the backwash position and the water replenishment position, and the valve core assembly 140 and the valve seat 116 form the corresponding water paths to control the flow direction of water in the water softener, which simplifies the control logic and reduces operating costs.

As shown in FIG. 6 and FIG. 7, according to some embodiments of the present invention, an outer peripheral wall of the valve seat 116 and an inner peripheral wall of the valve cavity 111 form a first water inlet cavity 130. A tank inlet cavity 131 and a second water inlet cavity 132 separated from each other are provided inside the valve seat 116. The tank inlet cavity 131 communicates with the tank inlet pipe 114. The water inlet pipe 112 communicates with both the first water inlet cavity 130 and the second water inlet cavity 132. A bypass cavity 133 is provided inside the valve seat 116, the bypass cavity 133 communicates with the water outlet pipe 113, and the bypass cavity 133 is separated from the second water inlet cavity 132. The tank inlet cavity 131 communicates with the first water inlet cavity 130 or the second water inlet cavity 132 through the valve core assembly 140. The first water inlet cavity 130, the second water inlet cavity 132, the valve core assembly 140 and the tank inlet cavity 131 jointly form the service water path. Raw water is transported to the first water inlet cavity 130 and the second water inlet cavity 132 through the water inlet pipe 112, flows to the tank inlet cavity 131 through the valve core assembly 140, and is transported to the inlet of the resin tank 400 through the tank inlet pipe 114.

The bypass cavity 133 communicates with the first water inlet cavity 130 or the second water inlet cavity 132 through the valve core assembly 140. The first water inlet cavity 130, the second water inlet cavity 132, the valve core assembly 140 and the bypass cavity 133 jointly form the bypass water path. Raw water is transported to the first water inlet cavity 130 and the second water inlet cavity 132 through the water inlet pipe 112, flows into the bypass cavity 133 through the valve core assembly 140, and finally flows out through the water outlet pipe 113 to be provided to the user. As such, the raw water may be transported to the resin tank 400 through the service water path for filtration to provide soft water, and the raw water may also be provided to the user through the bypass water path, which improves the flexibility of the water softener.

According to some embodiments of the present invention, the water outlet pipe 113 communicates with the tank outlet pipe 115 via a bypass check valve 137, and the tank outlet pipe 115 unidirectionally communicates with the water outlet pipe 113. As shown in FIG. 5 and FIG. 23, the soft water valve 100 further includes the bypass check valve 137. the water outlet pipe 113 communicates with the tank outlet pipe 115. The soft water produced by the resin tank 400 flows to the water outlet pipe 113 through the tank outlet pipe 115, and then is transported to the user end. As such, the water flowing in the water outlet pipe 113 includes the soft water produced in the resin tank 400 and the raw water flowing out through the bypass cavity 133. The bypass check valve 137 may be provided inside the water outlet pipe 113 or in the tank outlet pipe 115. The bypass check valve 137 is unidirectionally communicated, and water flows in a unidirectional direction from the tank outlet pipe 115 to the water outlet pipe 113, which prevents water in the water outlet pipe 113 from flowing back into the resin tank 400. A communicate position between the bypass cavity 133 and the water outlet pipe 113 is located between the bypass check valve 137 and an outlet of the water outlet pipe 113 to prevent raw water in the bypass cavity 133 from flowing to the tank outlet pipe 115. As shown in FIG. 5 and FIG. 23, in some embodiments, the soft water valve 100 further includes a flow meter 183, where the flow meter 183 is provided inside the water outlet pipe 113 and is closer to the outlet of the water outlet pipe 113 than the communicate position between the bypass cavity 133 and the water outlet pipe 113.The flow meter 183 is configured to detect the water flow output by the water outlet pipe 113. As shown in FIG. 23, the flow meter 183 is inserted into the water outlet pipe 113 and is fixedly connected to the water outlet pipe 113 by plugging.

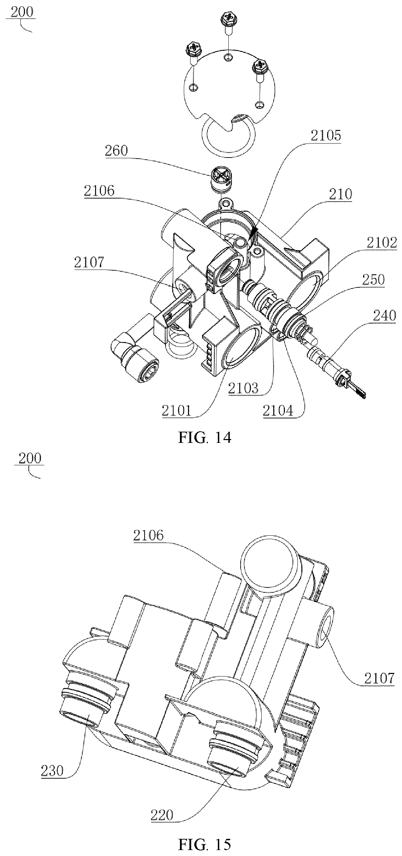

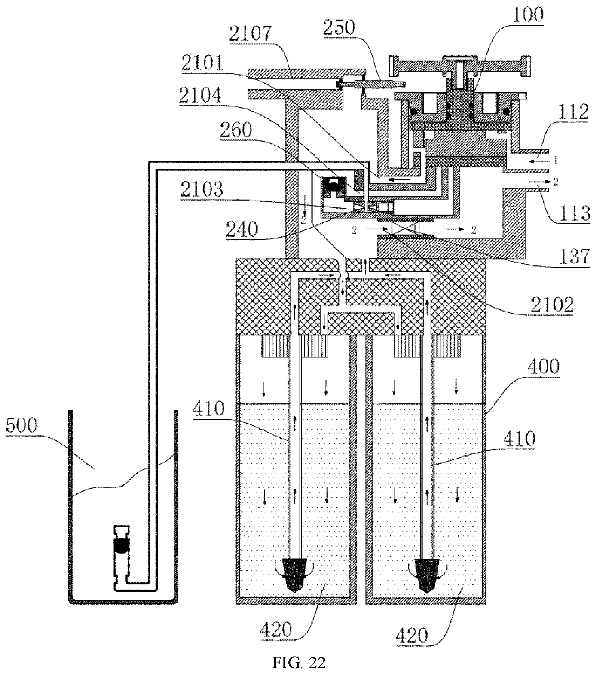

As shown in FIG. 14 and FIG. 22, according to some embodiments of the present invention, a wastewater discharge control assembly 250 is provided inside the transit connection assembly 200. The wastewater discharge control assembly 250 is provided in the wastewater discharge water path 2107, and the wastewater discharge control assembly 250 is configured to control on and off of the wastewater discharge water path 2107. The transmission mechanism 141 includes a driving gear 1432, a driven gear 1431, and a rotating shaft 150. The driving gear 1432 is provided at an output end of the driving portion 142. The driven gear 1431 meshes with the driving gear 1432. The driven gear 1431 is provided with at least one driving block 1433, and the driving block 1433 is configured to fit with the wastewater discharge control assembly 250 to open the wastewater discharge water path 2107. The rotating shaft 150 is connected to the driven gear 1431, where the rotating shaft 150 is connected to the valve core assembly 140 to drive the valve core assembly 140 to switch water paths. The wastewater discharge control assembly 250 opens the wastewater discharge water path 2107 through the fitting with the driving block 1433 at the driven gear 1431. Specifically, when the wastewater discharge water path 2107 needs to be opened, the driving block 1433 may extrude the wastewater discharge control assembly 250 through the rotation of the driven gear 1431, and the wastewater discharge water path 2107 is opened. For example, at the salt adsorption position, the salt adsorption water path is in the connected state, and the soft water valve 100 may transport the salt water in the salt box 500 to the resin tank 400. The salt water is used to replace the calcium and magnesium ions adsorbed on the resin to restore the resin, so that the resin may continue to adsorb calcium and magnesium ions. The wastewater after the restoration of the resin enters the wastewater discharge water path 2107 through the transit connection assembly 200. At this point, the driving block 1433 extrudes the wastewater discharge control assembly 250 to open the wastewater discharge water path 2107, and the wastewater is directly discharged. It is realized that one driving portion 142 may drive the switching of water paths and control the opening the wastewater discharge water path 2107, which simplifies the control logic.

In a specific arrangement, as shown in FIG. 5, the driving portion 142 is a driving motor, and the driving motor is fixedly connected to the valve body 110. The driving motor may be fixedly connected to the valve body 110 by screws. The driven gear 1431 is larger than the driving gear 1432, and the two gears are meshed. The driving motor drives the driving gear 1432 to rotate, the driving gear 1432 drives the driven gear 1431 to rotate, the driven gear 1431 drives the rotating shaft 150 to rotate, and then the moving plate 160 in the valve core assembly 140 may be driven to rotate. A transmission ratio of the driving gear 1432 to a transmission gear is greater than 1, that is, a quantity of teeth of the driving gear 1432 is greater than a quantity of teeth of the transmission gear, so as to amplify the driving torque, and provide sufficient power to drive the rotating shaft 150 and the moving plate 160 to rotate.

As shown in FIG. 5, FIG. 11 and FIG. 12, according to some embodiments of the present invention, the valve core assembly 140 includes a moving plate 160. The moving plate 160 is fixedly connected to the rotating shaft 150, and the rotating shaft 150 drives the moving plate 160 to rotate. The moving plate 160 is provided at the valve seat 116, and the moving plate 160 fits with the valve seat 116 to form the service water path, the salt adsorption water path, the bypass water path, the backwash water path and the water replenishment water path. The driving portion 142 is connected to the valve body 110. The rotating shaft 150 is rotatably connected to the valve body 110. The rotating shaft 150 is connected to the driving portion 142 in a transmission manner. The moving plate 160 is fixedly connected to the rotating shaft 150, and the rotating shaft 150 drives the moving plate 160 to rotate. The moving plate 160 is attached at a top of the valve seat 116, and the rotating shaft 150 is driven to rotate through a drive assembly. The rotating shaft 150 drives the moving plate 160 to rotate, the moving plate 160 fits with the valve seat 116, and a corresponding water path is formed. For example, the moving plate 160 is rotated, which makes the moving plate 160 fit with the tank inlet cavity 131. Thus, the first water inlet cavity 130, the second water inlet cavity 132, the moving plate 160 and the tank inlet cavity 131 jointly form the service water path.

As shown in FIG. 5, according to some embodiments of the present invention, the valve body 110 includes a valve body portion and a valve plug cover 118. The valve cavity 111 is provided inside the valve body portion, and a side of the valve cavity 111 is open. The rotating shaft 150 penetrates into the valve cavity 111. An end of the rotating shaft 150 is located inside the valve cavity 111, and another end of the rotating shaft 150 is located outside the valve cavity 111. Both a gear assembly 143 and the driving motor are located outside the valve cavity 111. The gear assembly 143 is formed by the meshing of the driving gear 1432 and the transmission gear, and the driving motor is the driving portion 142. The valve plug cover 118 is provided on an open end of the valve cavity 111 to seal the valve cavity 111. The rotating shaft 150 penetrates through the valve plug cover 118, and the gear assembly 143 is located outside the valve cavity 111. As shown in FIG. 6, an accommodation slot 117 is provided at the valve body portion, and the driving motor is accommodated in the accommodation slot 117. The valve plug cover 118 covers the accommodation slot 117, an output shaft of the driving motor penetrates through the valve plug cover 118, and an end of the driving motor abuts against and is fixedly connected to the valve plug cover 118.

As shown in FIG. 5, according to some embodiments of the present invention, the rotating shaft 150 includes a vertical shaft 151 and a connecting disk 152. An end of the vertical shaft 151 is connected to the drive assembly, the vertical shaft 151 penetrates into the valve cavity 111, and an end of the vertical shaft 151 is fixedly connected to the driven gear 1431. The connecting disk 152 is provided at another end of the vertical shaft 151, and the connecting disk 152 is stacked with and fixedly connected to the moving plate 160. The connecting disk 152 is in a disk shape to fit with the moving plate 160, and a diameter of the connecting disk 152 may be less than or equal to a diameter of the moving plate 160. In some embodiments, an extrude block is provided alongside of the valve plug cover 118 facing the valve cavity 111, the extrude block is located inside the valve cavity 111, and the extrude block abuts against the connecting disk 152 to limit the rotating shaft 150 in an axial direction.

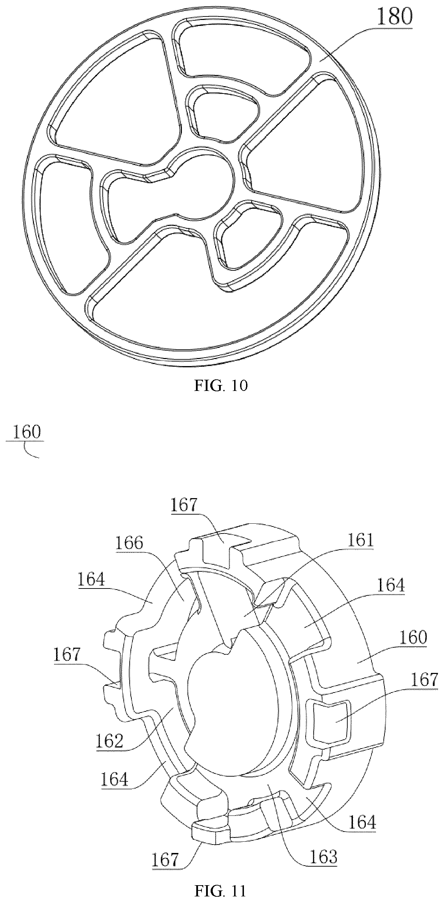

As shown in FIG. 5 and FIG. 11, according to some embodiments of the present invention, the connecting disk 152 is provided with a first engaging portion 153, the moving plate 160 is provided with a second engaging portion 167 fitting with the first engaging portion 153. One of the first engaging portion 153 or the second engaging portion 167 is a slot body, and another of the first engaging portion 153 or the second engaging portion 167 is a protrusion. The first engaging portion fits with the second engaging portion to limit the moving plate 160 in a circumferential direction, and the rotating shaft 150 may drive the moving plate 160 to rotate.

Both the first engaging portion and the second engaging portion may be multiple. The multiple first engaging portions are spaced and distributed along a circumferential direction of the connecting disk 152, and the multiple second engaging portions are spaced and distributed along a circumferential direction of the moving plate 160. The multiple first engaging portions include a first position portion, and the multiple second engaging portions include a second position portion. The first position portion is adapted to the second position portion to position a relative position of the moving plate 160 and the connecting disk 152 in the circumferential direction, and avoid the rotating shaft 150 and the moving plate 160 from being misplaced during an assembling process. For example, as shown in FIG. 11, the quantity of the second engaging portions is four, of which three second engaging portions are slot bodies, and one second engaging portion is a protrusion. The quantity of first engaging portions is also four, of which three first engaging portions are protrusions, and one first engaging portion is a slot body. The first engaging portion as the slot body is adapted to the second engaging portion as the protrusion to position the moving plate 160 and the connecting disk 152 in the circumferential direction, so that the relative position of the two in the circumferential direction is uniquely determined, which facilitates assembling.

Referring to FIG. 5, according to some embodiments of the present invention, the valve body 110 further includes a control panel 119. The control panel 119 is fixed with respect to the valve seat 116, and the control panel 119 may be fixedly connected to the valve plug cover 118. The control panel 119 is sleeved at the rotating shaft 150, and the control panel 119 is located between the valve plug cover 118 and the gear assembly 143. The control panel 119 is provided with a Hall sensor 1191, the gear assembly 143 is provided with a magnetic member, and the Hall sensor 1191 is configured to sense a position of the magnetic member. As such, the driving motor may be controlled based on the position of the magnetic member detected by the Hall sensor 1191, and a rotation angle of the moving plate 160 may be controlled to rotate the moving plate 160 to a corresponding position.

As shown in FIG. 5, in some embodiments, the Hall sensor 1191 may be multiple, and the multiple Hall sensors 1191 are spaced apart along a circumferential direction of the rotating shaft 150. Positions of the multiple Hall sensors 1191 correspond to the service position, the salt adsorption position, the bypass position, the backwash position, and the water replenishment position, respectively. When the magnetic member moves to a position closest to one of the Hall sensors 1191, the valve core assembly 140 switches to the corresponding position. For example, a position of one of the multiple Hall sensors 1191 corresponds to the service position. When the magnetic member moves to a position closest to this Hall sensor 1191, the valve core assembly 140 switches to the service position. An orthographic projection of a motion trajectory of the magnetic member at the control panel 119 and each Hall sensor 1911 may overlap to improve the detection accuracy of the Hall sensor 1191. When the valve core assembly 140 switches to the service position, the magnetic member is opposite to the corresponding Hall sensor 1191. As shown in FIG. 5, the soft water valve 100 further includes an upper cover 101. The upper cover 101 is provided at the valve body 110 and is fixedly connected to the valve body 110, and the upper cover 101 plays a role in sealing and protection. A mount space is formed between the upper cover 101 and the valve body 110, an open end of the valve seat 116 is located inside the mount space, and both the drive assembly and the control panel 119 are accommodated in the mount space.

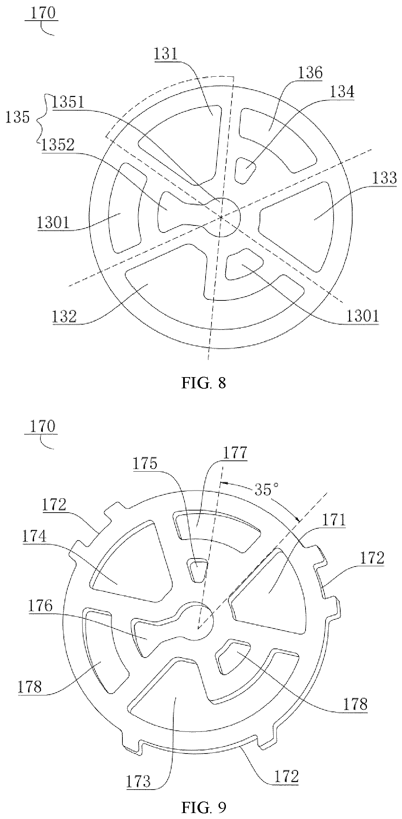

As shown in FIG. 5, FIG. 8 and FIG. 9, according to some embodiments of the present invention, the valve core assembly 140 further includes a fixed plate 170. The fixed plate 170 is attached to the valve seat 116, and the fixed plate 170 is sandwiched between the moving plate 160 and the valve seat 116. The fixed plate 170 is fixed with respect to the valve seat 116, and the moving plate 160 is rotatable with respect to the fixed plate 170. The fixed plate 170 may separate the moving plate 160 from the valve seat 116 to avoid wear of the valve seat 116 during the rotation of the fixed plate 170, which extends the service life of the valve body 110. In addition, the fixed plate 170 has good replaceability, which is convenient for later maintenance. As shown in FIG. 8, the fixed plate 170 is provided with a fixed bypass hole 171 corresponding to and communicating with the bypass cavity 133. The moving plate 160 fits with the fixed plate 170 and the valve seat 116 to form the service water path, the salt adsorption water path, the bypass water path, the backwash water path, and the water replenishment water path. Specifically, the first water inlet cavity 130, the second water inlet cavity 132, the moving bypass hole 162, the fixed bypass hole 171, and the bypass cavity 133 jointly form the bypass water path. The fixed plate 170 is further provided with a fixed water inlet hole 173 and a fixed tank inlet hole 174. The fixed water inlet hole 173 communicates with the second water inlet cavity 132, and the fixed tank inlet hole 174 communicates with the tank inlet cavity 131.

As shown in FIG. 5 and FIG. 10, in some embodiments, a seal washer 180 is provided between the fixed plate 170 and the valve seat 116. The seal washer 180 is the same as the fixed plate 170 in shape, or the seal washer 180 is the same as a top surface of the valve seat 116 in shape, so that the fixed plate 170 and the valve seat 116 may be sealed to prevent water seepage. It may also fix the fixed plate 170 with respect to the valve seat 116 to prevent the fixed plate 170 from sliding with the moving plate 160. The seal washer 180 may be a rubber member, and the seal washer 180 may produce a certain deformation to fit closely with the valve seat 116 and the fixed plate 170 to prevent water seepage.

As shown in FIG. 6 and FIG. 9, according to some embodiments of the present invention, an inner wall of the valve cavity 111 is provided with a first fixing portion 1111, and a periphery of the fixed plate 170 is provided with a second fixing portion 172. The second fixing portion 172 is snapped with the first fixing portion 1111 to limit the fixed plate 170 in a circumferential direction and prevent the fixed plate 170 from rotating with respect to the valve seat 116. One of the second fixing portion 172 or the first fixing portion 1111 is a slot body, and another of the second fixing portion 172 or the first fixing portion 1111 is a protrusion. In the examples of FIG. 6 and FIG. 9, the first fixing portion 1111 is a protrusion, and the second fixing portion 172 is a slot body.

In some embodiments, both the first fixing portion 1111 and the second fixing portion 172 are multiple, and the multiple first fixing portions 1111 are spaced apart along a circumferential direction of the valve cavity 111, and the multiple second fixing portions 172 are spaced apart along a circumferential direction of the fixed plate 170. Among the multiple first fixing portions 1111, there is one first fixing portion 1111 whose width is different from the widths of the other first fixing portions 1111, and among the multiple second fixing portions 172, there is one second fixing portion 172 whose width is different from the widths of the other second fixing portions 172. This first fixing portion 1111 and this second fixing portion 172 fit with each other to locate the relative positions of the fixed plate 170 and the valve seat 116 in the circumferential direction, which avoids the fixed plate 170 from being misaligned with the valve seat 116 during mounting and causing failure to seal.

For example, as shown in FIG. 6, there are three first fixing portions 1111, all of which are protrusions, and as shown in FIG. 9, there are three second fixing portions 172, all of which are protrusions. A circumferential width of one of the first fixing portions 1111 is greater than the circumferential widths of the other two first fixing portions 1111, and a circumferential width of one of the second fixing portions 172 is greater than the circumferential widths of the other two second fixing portions 172. This first fixing portion 1111 and this second fixing portion 172 fits to position the relative positions of the fixed plate 170 and the valve seat 116 in the circumferential direction. As such, it is convenient to mount the fixed plate 170, avoiding misplacement of the fixed plate 170 during mounting that could lead to poor sealing and water leakage from the valve seat 116.

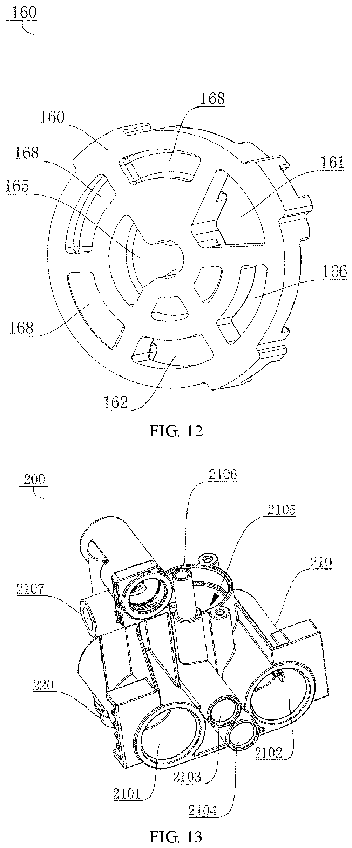

Referring to FIG. 11 and FIG. 12, according to some embodiments of the present invention, the moving plate 160 is provided with a moving water inlet hole 161 and a moving bypass hole 162 which are spaced apart. At the service position, the first water inlet cavity 130 and the second water inlet cavity 132 communicate with the tank inlet cavity 131 through the moving water inlet hole 161, and the first water inlet cavity 130, the second water inlet cavity 132, the moving water inlet hole 161 and the tank inlet cavity 131 form the service water path. At this point, the raw water is transported to the first water inlet cavity 130 and the second water inlet cavity 132 through the water inlet pipe 112, the raw water in the first water inlet cavity 130 and the second water inlet cavity 132 flows to the tank inlet cavity 131 through the moving water inlet hole 161, and the raw water in the tank inlet cavity 131 is transported to the inlet of the resin tank 400 through the tank inlet pipe 114. The raw water contacts the resin to reduce the concentration of calcium and magnesium ions to form soft water. The soft water flows into the tank outlet pipe 115 from the outlet of the resin tank 400, and flows unidirectionally to the water outlet pipe 113 through the tank outlet pipe 115, and is finally transported to the user end through a pipeline.

At the bypass position, the first water inlet cavity 130 and the second water inlet cavity 132 communicate with the bypass cavity 133 through the moving bypass hole 162, and the first water inlet cavity 130, the second water inlet cavity 132, the moving bypass hole 162 and the bypass cavity 133 form the bypass water path. The raw water is transported to the first water inlet cavity 130 and the second water inlet cavity 132 through the water inlet pipe 112, the raw water in the first water inlet cavity 130 and the second water inlet cavity 132 flows into the bypass cavity 133 through the moving bypass hole 162, and the raw water in the bypass cavity 133 flows out through the water outlet pipe 113 and is transported to the user end through the pipeline. As shown in FIG. 6, the tank inlet cavity 131 and the bypass cavity 133 are spaced apart along a circumferential direction of the valve seat 116, and the moving water inlet hole 161 and the moving bypass hole 162 are spaced apart along the circumferential direction of the moving plate 160. By rotating the moving plate 160, the moving water inlet hole 161 may be switched to be connected or disconnected with the tank inlet cavity 131, and the moving bypass hole 162 may be switched to be connected or disconnected with the bypass cavity 133.

Referring to FIG. 11, according to some embodiments of the present invention, a surface of the moving plate 160 facing away from the valve seat 116 is provided with a water inlet channel 163, and the water inlet channel 163 communicates the moving water inlet hole 161 with the first water inlet cavity 130 to guide the water in the first water inlet cavity 130 into the moving water inlet hole 161. In some embodiments, the surface of the moving plate 160 facing away from the valve seat 116 is further provided with a communication port 164, and the communication port 164 communicates the water inlet channel 163 with the first water inlet cavity 130. The communication port 164 is provided at an edge of the moving plate 160 and extends along a radial direction of the moving plate 160. There are multiple communication ports 164 for the communication between the water inlet channel 163 and the first water inlet cavity 130, and the multiple communication ports 164 are spaced apart along the circumferential direction of the moving plate 160, where some of the communication ports 164 communicate with the moving water inlet hole 161 or the moving bypass hole 162. The water in the first water inlet cavity 130 may flow from multiple directions to the moving water inlet hole 161 and the moving bypass hole 162. The multiple communication ports 164 may be evenly distributed along the circumferential direction of the moving plate 160 to evenly guide the water into the moving water inlet hole 161 and the moving bypass hole 162. As such, when the connecting disk 152 is connected to the moving plate 160, the water in the first water inlet cavity 130 may flow to the moving water inlet hole 161 and the moving bypass hole 162 through the water inlet channel 163 and the communication port 164, and then flow to the tank inlet cavity 131 and the bypass cavity 133. When the water flows in the water inlet channel 163 and the communication port 164, the water exerts pressure at the moving plate 160, so that the moving plate 160 is closely fitted with the valve seat 116, which is conducive to simplifying the fix structure of the moving plate 160. As shown in FIG. 11, the water inlet channel 163 may extend along an arc, that is, the water inlet channel 163 is arc-shaped, an end of the arc-shaped water inlet channel 163 communicates with the moving water inlet hole 161, and another end of the arc-shaped water inlet channel 163 communicates with the moving bypass hole 162.

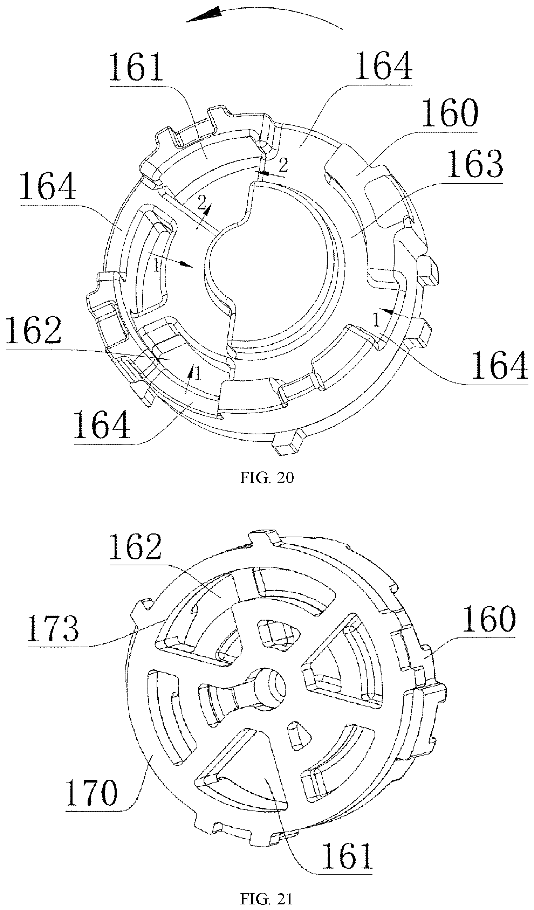

As shown in FIG. 19 to FIG. 22, FIG. 19 is a schematic structural diagram of a soft water valve 100 when a valve core assembly 140 is located at a service position; FIG. 20 is a schematic diagram of a relative position of a moving plate 160 and a fixed plate 170 when a valve core assembly 140 is located at a service position; FIG. 21 is a schematic diagram of a relative position of a moving plate 160 and a fixed plate 170 from another perspective when a valve core assembly 140 is located at a service position; and FIG. 22 is a cross-sectional view of a water softener when a valve core assembly 140 is located at a service position, and the arrows in the figure indicate the direction of water flow.

When the valve core assembly 140 is located at the service position, the first water inlet cavity 130, the second water inlet cavity 132, the communication port 164, the water inlet channel 163, the moving water inlet hole 161, the fixed tank inlet hole 174 and the tank inlet cavity 131 jointly form the service water path. the moving water inlet hole 161 communicates with the tank inlet cavity 131 through the fixed tank inlet hole 174, the moving water inlet hole 161 communicates with the first water inlet cavity 130 through the water inlet channel 163 and the communication port 164, and the moving bypass hole 162 communicates with the second water inlet cavity 132 through the fixed water inlet hole 173. Thus, the raw water is transported to the first water inlet cavity 130 and the second water inlet cavity 132 through the water inlet pipe 112. The raw water in the first water inlet cavity 130 may flow into the water inlet channel 163 through the communication port 164 (in the flow direction shown by arrow 1 in FIG. 19 and FIG. 20), and then flow into the moving water inlet hole 161 (in the flow direction shown by arrow 2 in FIG. 19 and FIG. 20). The raw water in the second water inlet cavity 132 may flow into the water inlet channel 163 through the fixed water inlet hole 173 and the moving bypass hole 162, and then flow into the moving water inlet hole 161. After the raw water flows into the moving water inlet hole 161, it flows into the tank inlet cavity 131 through the fixed tank inlet hole 174. The raw water in the tank inlet cavity 131 is transported to the inlet of the resin tank 400 through the tank inlet pipe 114.

As shown in FIG. 22, both the inlet and outlet of the resin tank 400 are provided at an end of the resin tank 400. A center pipe 410 is provided inside the resin tank 400. An end of the center pipe 410 communicates with the outlet of the resin tank 400, and another end of the center pipe 410 communicates with the resin tank 400. The resin is accommodated in the resin tank 400 and is located outside the center pipe 410. Raw water enters the resin tank 400 from the inlet of the resin tank 400 (in the flow direction shown by arrow 2 in FIG. 22) and contacts the resin. The resin adsorbs calcium and magnesium ions in the raw water to form soft water. The soft water reaches the another end of the resin tank 400, flows from the center pipe 410 to the outlet of the resin tank 400, and flows to the water outlet pipe 113 through the tank outlet pipe 115 and the bypass check valve 137. The soft water output by the water outlet pipe 113 is transported to the user end through the pipeline.

As shown in FIG. 23 and FIG. 24, FIG. 24 is a cross-sectional view of a water softener when a valve core assembly 140 is located at a bypass position, and the arrow in the figure indicates the direction of water flow. At the bypass position, the first water inlet cavity 130, the second water inlet cavity 132, the communication port 164, the water inlet channel 163, the moving bypass hole 162, the fixed bypass hole 171 and the bypass cavity 133 jointly form the bypass water path. The moving bypass hole 162 communicates with the bypass cavity 133 through the fixed bypass hole 171, the moving bypass hole 162 communicates with the first water inlet cavity 130 through the water inlet channel 163 and the communication port 164, and the moving water inlet hole 161 communicates with the second water inlet cavity 132 through the fixed water inlet hole 173. The raw water is transported to the first water inlet cavity 130 and the second water inlet cavity 132 through the water inlet pipe 112. The raw water in the first water inlet cavity 130 flows into the moving bypass hole 162 through the communication port 164 and the water inlet channel 163. The raw water in the second water inlet cavity 132 flows into the moving bypass hole 162 through the fixed water inlet hole 173, the moving water inlet hole 161 and the water inlet channel 163. The raw water flowing into the moving bypass hole 162 flows into the bypass cavity 133 through the fixed bypass hole 171. The raw water in the bypass cavity 133 flows out from the water outlet pipe 113 and is transported to the user end through the pipeline. As shown in FIG. 24, in this process, the raw water does not pass through the resin tank 400. As such, water may be flexibly supplied according to user needs during use, and the consumption of resin is reduced.

Referring to FIG. 6, according to some embodiments of the present invention, the valve seat 116 is provided with a salt adsorption cavity 134 and a salt adsorption communication cavity 135 separated from each other, and the salt adsorption cavity 134 communicates with the salt box 500. As shown in FIG. 12, the moving plate 160 is provided with a moving salt adsorption and water distribution hole 165, the moving salt adsorption and water distribution hole 165 is a blind hole 168, and the moving salt adsorption and water distribution hole 165 is provided at a surface of the moving plate 160 facing the valve seat 116. The salt adsorption communication cavity 135 communicates with the moving salt adsorption and water distribution hole 165. the moving water inlet hole 161 extends through the moving plate 160 along a thickness direction of the moving plate 160, and the moving salt adsorption and water distribution hole 165 is separated from the moving water inlet hole 161. At the salt adsorption position, the moving water inlet hole 161 communicate with the moving salt adsorption and water distribution hole 165 through the salt adsorption communication cavity 135, and the moving salt adsorption and water distribution hole 165 communicates with the salt adsorption cavity 134 and the bypass cavity 133 respectively. the moving water inlet hole 161, the salt adsorption communication cavity 135, the moving salt adsorption and water distribution hole 165 and the salt adsorption cavity 134 form a salt adsorption water path, and the moving water inlet hole 161, the salt adsorption communication cavity 135, the moving salt adsorption and water distribution hole 165 and the bypass cavity 133 form the bypass water path. As such, at the salt adsorption position, raw water may be provided to the user through the bypass water path.

As shown in FIG. 6 and FIG. 12, the salt adsorption communication cavity 135 extends along a radial direction of the valve seat 116, and an end of the salt adsorption communication cavity 135 is located at a center of the valve seat 116; the moving salt adsorption and water distribution hole 165 extends along the radial direction of the moving plate 160, and an end of the moving salt adsorption and water distribution hole 165 is located at a center of the moving plate 160. As such, during the rotation of the moving plate 160, an end of the salt adsorption communication cavity 135 keeps communication with an end of the moving salt adsorption and water distribution hole 165, and the salt adsorption communication cavity 135 and the moving salt adsorption and water distribution hole 165 may play a role in communicating a through hole on the moving plate 160 with a cavity on the valve seat 116.

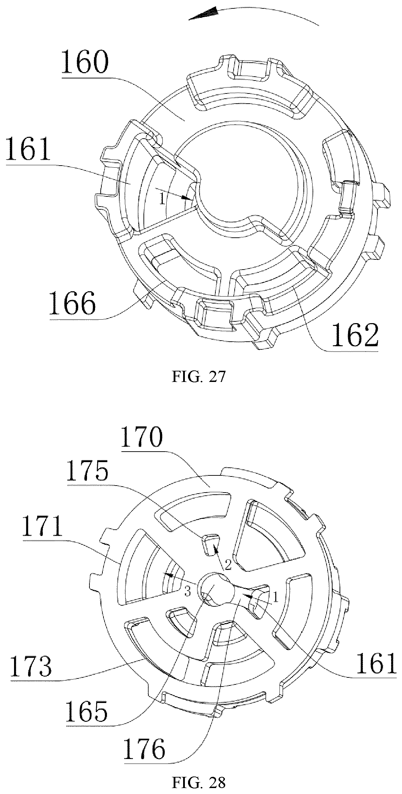

Referring to FIG. 25 to FIG. 29, all the valve core assemblies 140 in the figures are located at the salt adsorption position. Among them, FIG. 25 is a schematic structural diagram of a soft water valve 100; FIG. 26 is a schematic diagram of internal structural of a valve cavity 111, in which a moving plate 160 and a fixed plate 170 are not shown, and the arrows in the figure indicate the flow direction of water; FIG. 27 is a schematic diagram of a relative position between a moving plate 160 and a fixed plate 170; FIG. 28 is a schematic diagram of a relative position between a moving plate 160 and a fixed plate 170 from another perspective, and the arrows in the figure indicate the flow direction of water; and FIG. 29 is a cross-sectional view of the water softener, and the arrows in the figure indicate the flow direction of water.

At the salt adsorption position, the moving water inlet hole 161 communicates with the salt adsorption communication cavity 135 through the fixed salt adsorption communication hole 176 at the fixed plate 170, the salt adsorption communication cavity 135 communicates with the moving salt adsorption and water distribution hole 165 through the fixed salt adsorption communication hole 176, the moving salt adsorption and water distribution hole 165 communicates with the bypass cavity 133 through the fixed bypass hole 171, and the move salt adsorption and water distribution hole 165 communicates with the salt adsorption cavity 134 through the fixed salt adsorption hole 175. The moving bypass hole 162 communicates with the second water inlet cavity 132 through the fixed water inlet hole 173.

The raw water is input into the first water inlet cavity 130 and the second water inlet cavity 132 through the water inlet pipe 112. The raw water in the first water inlet cavity 130 flows to the moving water inlet hole 161 through the communication port 164 and the water inlet channel 163, and the raw water in the second water inlet cavity 132 flows to the moving water inlet hole 161 through the fixed water inlet hole 173, the moving bypass hole 162 and the water inlet channel 163. The raw water in the moving water inlet hole 161 flows into the salt adsorption communication cavity 135 through the fixed salt adsorption communication hole 176 (in the flow direction shown by arrow 1 in FIG. 27 and FIG. 28). The raw water in the salt adsorption communication cavity 135 flows into the moving salt adsorption and water distribution hole 165. In the moving salt adsorption and water distribution hole 165, a part of the raw water flows into the salt adsorption cavity 134 through the fixed salt adsorption hole 175 (in the flow direction shown by arrow 2 in FIG. 28); another part of the raw water flows into the bypass cavity 133 through the fixed bypass hole 171, and the raw water in the bypass cavity 133 is output through the water outlet pipe 113 to be provided to the user.

According to some embodiments of the present invention, the salt adsorption cavity 134 selectively communicates with the salt box 500. At the salt adsorption position: the salt adsorption cavity 134 communicates with the salt box 500, the soft water valve 100 is in a salt adsorption mode, and the salt water in the salt box 500 and the raw water in the salt adsorption cavity 134 are transported to the resin tank 400 to clean and restore the resin, so that the resin restores its adsorption capacity; the salt adsorption cavity 134 is disconnected from the salt box 500, the soft water valve 100 is in a slow wash mode, the salt box 500 stops providing salt water, and the raw water in the salt adsorption cavity 134 is transported to the resin tank 400 to wash the resin tank 400 to wash away the salt in the resin. As shown in FIG. 7, in some embodiments, the soft water valve 100 further includes a jet pipe 181, and a jet injector 240 is provided inside the jet pipe 181. The jet pipe 181 is connected to the valve body 110, and the jet pipe 181 communicates with the salt adsorption cavity 134. The jet pipe 181 communicates with both the salt box 500 and the resin tank 400. When the salt adsorption cavity 134 communicates with the salt box 500, the jet injector 240 may transport the water in the salt adsorption cavity 134 and the salt water in the salt box 500 to the resin tank 400; when the salt adsorption cavity 134 is disconnected from the salt box 500, the jet pipe 181 may transport the water in the salt adsorption cavity 134 to the resin tank 400 to wash the resin.

Referring to FIG. 29, according to some embodiments of the present invention, the soft water valve 100 further includes a wastewater discharge water path 2107. The wastewater discharge water path 2107 selectively communicates with the tank inlet pipe 114, and the tank inlet pipe 114 communicates with the inlet of the resin tank 400, so that the wastewater discharge water path 2107 communicates with the resin tank 400 through the tank inlet pipe 114. At the salt adsorption position, the wastewater discharge water path 2107 communicates with the tank inlet pipe 114. The wastewater generated by washing the resin in the salt adsorption mode and the slow wash mode may be discharged through the wastewater discharge water path 2107. In some embodiments, a wastewater discharge control assembly 250 is provided inside the transit connection assembly 200, and the wastewater discharge control assembly 250 is configured to control the connection or disconnection between the wastewater discharge water path 2107 and the tank inlet pipe 114. In a specific example, as shown in FIG. 29, the wastewater discharge control assembly 250 is provided at a connection position between the wastewater discharge water path 2107 and the tank inlet pipe 114, and a bottom surface of the driven gear 1431 is provided with a driving block 1433. When the valve core assembly 140 is located at the salt adsorption position, the driving block 1433 pushes the pressure rod to move, so that the wastewater discharge water path 2107 communicates with the tank inlet pipe 114.

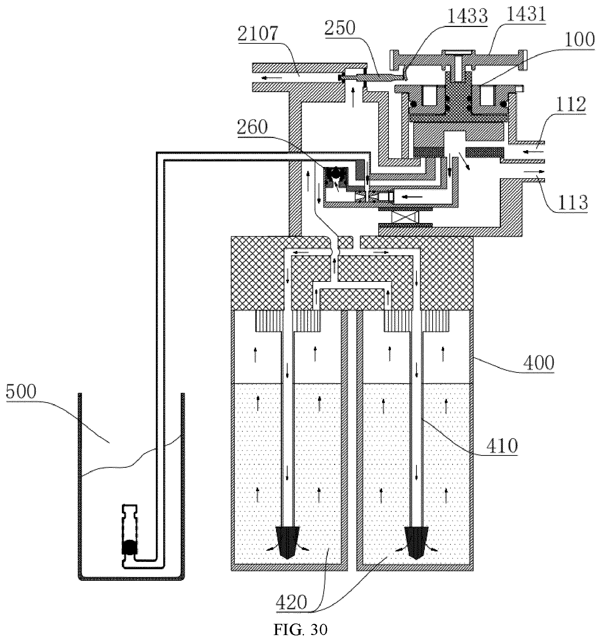

As shown in FIG. 29, the jet pipe 181 communicates with the center pipe 410 of the resin tank 400. When the soft water valve 100 is in the salt adsorption mode, the pressure rod is in an open state. A portion of the raw water input to the soft water valve 100 is transported to the jet pipe 181 through a salt adsorption water path (in the flow direction shown by arrow 2 in FIG. 29), and the jet pipe 181 mixes the salt water and the raw water and transports them to the outlet of the resin tank 400. The mixed salt water flows to the another end of the resin tank 400 through the center pipe 410 and contacts with the resin, thereby replacing the calcium and magnesium ions adsorbed on the resin, and the resin restores its adsorption capacity. The mixed salt water after cleaning the resin flows out from the inlet of the resin tank 400 and is discharged from the wastewater discharge water path 2107. Another portion of the raw water input to the soft water valve 100 is transported to the water outlet pipe 113 through the bypass water path (in the flow direction shown by arrow 3 in FIG. 29) to be provided to the user. As shown in FIG. 30, in the slow wash mode, the flow direction of the raw water is the same as the flow path of the raw water in the above-mentioned salt adsorption mode, except that the salt box 500 does not provide salt water, which is not described here again. At the salt adsorption position, the soft water valve 100 provides water through the salt adsorption water path and the bypass water path. As such, water may be provided to the user while the resin is washed and restored, and thus water is supplied uninterruptedly, avoiding affecting water usage by the user.

As shown in FIG. 6 and FIG. 12, according to some embodiments of the present invention, the moving plate 160 is provided with a moving backwash hole 166 that extends along a thickness direction of the moving plate 160, a backwash cavity 136 is provided inside the seat body, the valve body 110 is provided with a backwash pipe 182, the backwash pipe 182 communicates with the backwash cavity 136, and the backwash pipe 182 communicates with the center pipe 410 of the resin tank 400. In the example of FIG. 6, the backwash cavity 136 and the salt adsorption cavity 134 are spaced apart in the radial direction of the valve seat 116. In the example of FIG. 12, the moving water inlet hole 161, the moving backwash hole 166 and the moving bypass hole 162 are sequentially spaced in the circumferential direction of the moving plate 160.

At the backwash position, the backwash cavity 136 communicates with the moving bypass hole 162 to form the backwash water path; the moving backwash hole 166 communicates with the bypass cavity 133 to form the bypass water path. At the backwash position, a portion of the raw water input to the soft water valve 100 is transported into the resin tank 400 through the backwash water path and the backwash pipe 182 to backwash the resin, wash away the broken resin, and increase the gap among the resin particles. As such, the resin particles are fully in contact with the raw water at the service position, which improves the adsorption effect on calcium and magnesium ions in the raw water. Another portion of the raw water input to the soft water valve 100 is output through the bypass water path and the water outlet pipe 113 to be provided to the user for use, and water is supplied uninterruptedly. When the valve core assembly 140 is at the backwash position, the wastewater discharge water path 2107 communicates with the resin tank 400 to discharge the wastewater generated during the backwash process.

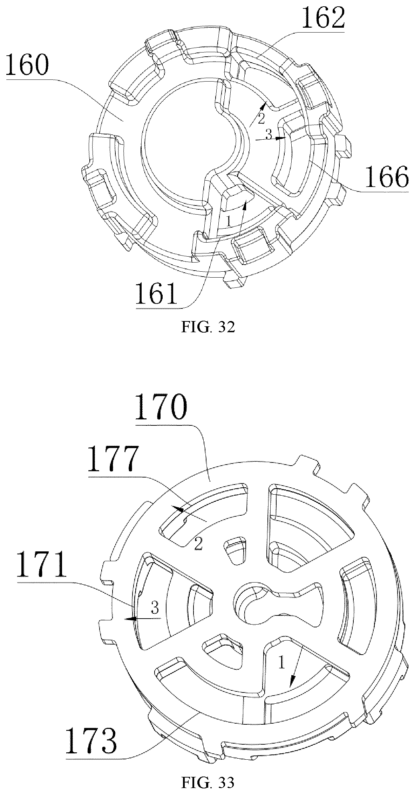

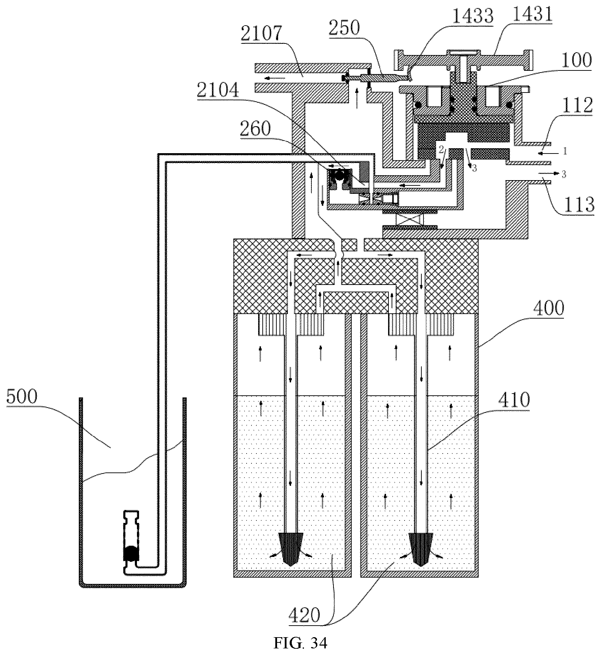

As shown in FIG. 31 to FIG. 34, all the valve core assemblies 140 are at the backwash positions, and the arrows in the figures indicate the flow direction of water. Among them, FIG. 31 is a schematic structural diagram of a soft water valve 100; FIG. 32 is a schematic diagram of a relative position between a moving plate 160 and a fixed plate 170; FIG. 33 is a schematic diagram of a relative position between a moving plate 160 and a fixed plate 170 from another perspective; and FIG. 34 is a cross-sectional view of the water softener.

At the backwash position, the valve core assembly 140 and the valve seat 116 form the backwash water path and the bypass water path. The moving bypass hole 162 communicates with the backwash cavity 136 through the fixed backwash hole 177, the moving backwash hole 166 communicates with the bypass cavity 133 through the fixed bypass hole 171, and the moving water inlet hole 161 communicates with the second water inlet cavity 132 through the fixed water inlet hole 173. The raw water is transported to the first water inlet cavity 130 and the second water inlet cavity 132 through the water inlet pipe 112 (in the flow direction shown by the arrow 1 in FIG. 34). The raw water in the first water inlet cavity 130 flows into the moving bypass hole 162 and the moving backwash hole 166 through the communication port 164 and the water inlet channel 163, and the raw water in the second water inlet cavity 132 flows into the moving bypass hole 162 and the moving backwash hole 166 through the fixed water inlet hole 173, the moving water inlet hole 161 and the water inlet channel 163.

The raw water flowing to the moving bypass hole 162 flows into the backwash cavity 136 through the fixed backwash hole 177 (in the flow direction shown by the arrow 2 in FIG. 34), and then flows into the center pipe 410 of the resin tank 400 through the backwash pipe 182. The raw water is transported to the another end of the resin tank 400 through the center pipe 410 to wash the resin. At the backwash position, the wastewater discharge water path 2107 communicates with the tank inlet pipe 114 and the resin tank 400. The wastewater generated after the raw water washes the resin flows out through the inlet of the resin tank 400 and is discharged from the wastewater discharge water path 2107. In some embodiments, the driven gear 1431 is provided with multiple push blocks. When the valve core assembly 140 moves to the backwash position, one of the push blocks pushes the pressure rod, so that the wastewater discharge water path 2107 communicates with the tank inlet pipe 114. The raw water flowing to the moving backwash hole 166 flows into the bypass cavity 133 through the fixed bypass hole 171 (in the flow direction shown by arrow 3 in FIG. 34), and then outputs from the water outlet pipe 113 to be provided to the user. Thus, during the backwash process, the water softener may supply water uninterruptedly.

According to some embodiments of the present invention, the valve seat 116 is provided with a water replenishment cavity separated from the salt adsorption cavity 134. The soft water valve 100 further includes a water replenishment pipe, the water replenishment pipe is connected to the valve body 110, and the water replenishment cavity communicates with the water replenishment pipe. A salt adsorption check valve 260 is provided between the water replenishment pipe and the jet pipe 181. The salt adsorption check valve 260 is unidirectionally communicated based on a pressure difference between the water replenishment pipe and the jet pipe 181 to control the on and off of the jet pipe 181 and the resin tank 400. For example, in the example of FIG. 29, when the valve core assembly 140 is at the salt adsorption position, the raw water flows into the jet pipe 181 through the salt adsorption water path, and no water flows through the water replenishment pipe. At this point, the pressure in the jet pipe 181 is greater than the pressure of the water replenishment pipe, the jet pipe 181 communicates with the resin tank 400, and the raw water may flow from the jet pipe 181 to the resin tank 400.

At the water replenishment position, the moving water inlet hole 161 communicates with the water replenishment cavity and the salt adsorption cavity 134, and the pressure difference between the water replenishment pipe and the jet pipe 181 is zero. The salt adsorption check valve 260 blocks the communication between the jet pipe 181 and the resin tank 400, while the jet pipe 181 remains communication with the salt box 500. The salt adsorption cavity 134 replenishes water to the salt box 500 through the jet pipe 181. the moving water inlet hole 161, the water replenishment cavity, the salt adsorption cavity 134, and the jet pipe 181 form the water replenishment water path. In an embodiment, salt is generally accommodated in the salt box 500, and the salt box 500 needs to maintain a state of "seeing salt but not seeing water" to avoid the salt box 500 being unable to provide salt water during use and causing resin restoration failure. At the water replenishment position, water is replenished to the salt box 500 through the water replenishment water path to dissolve the salt in the salt box 500 and replenish the salt water.

In some embodiments, the water replenishment cavity and the backwash cavity 136 are the same cavity, and the water replenishment pipe and the backwash pipe 182 are the same pipe, that is, the backwash cavity 136 is the water replenishment cavity, and the backwash pipe 182 is the water replenishment pipe. For ease of understanding, the following takes the water replenishment cavity and the backwash cavity 136 as the same cavity, and the water replenishment pipe and the backwash pipe 182 as the same pipe as an example to describe the structure and working process of the soft water valve 100 at the water replenishment position.

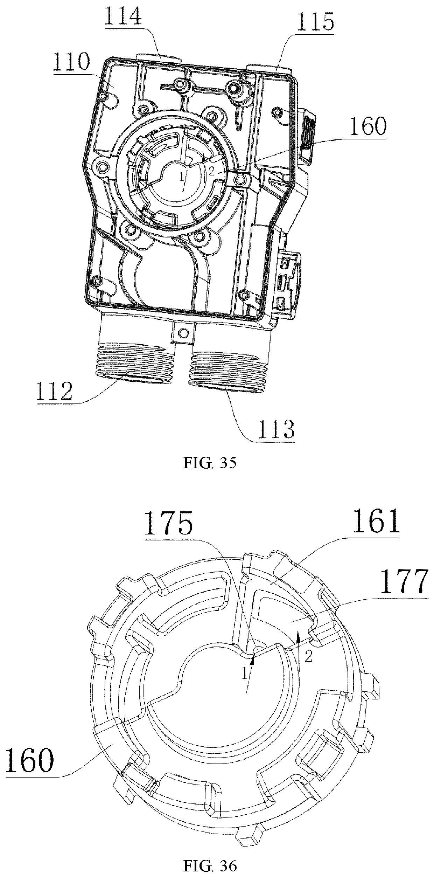

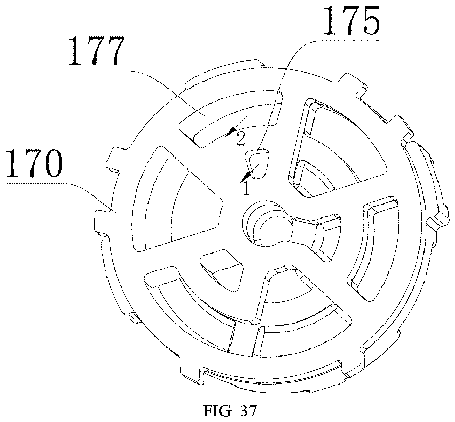

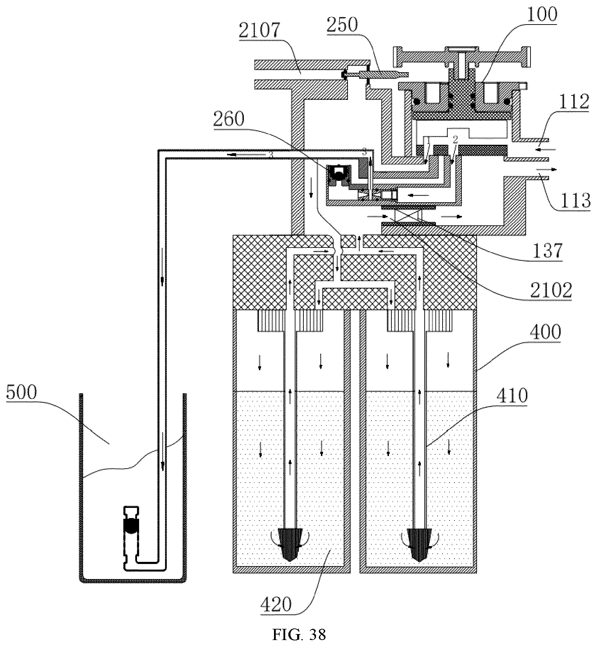

As shown in FIG. 35 to FIG. 38, all the valve core assemblies 140 are located at the water replenishment positions, and the arrows in the figures indicate the flow direction of water. Among them, FIG. 35 is a schematic structural diagram of a soft water valve 100; FIG.36 is a schematic diagram of a relative position between a moving plate 160 and a fixed plate 170; and FIG. 37 is a schematic diagram of a relative position between a moving plate 160 and a fixed plate 170 from another perspective. At the water replenishment position, the moving water inlet hole 161 communicates with the salt adsorption cavity 134 through the fixed salt adsorption hole 175, the moving water inlet hole 161 communicates with the backwash cavity 136 through the fixed backwash hole 177, and the moving backwash hole 166 communicates with the tank inlet cavity 131 through the fixed tank inlet hole 174. The first water inlet cavity 130, the moving water inlet hole 161, the water replenishment cavity, the salt adsorption cavity 134 and the jet pipe 181 form the water replenishment water path. The first water inlet cavity 130, the moving backwash hole 166, and the tank inlet cavity 131 jointly form the service water path.

The raw water is transported to the first water inlet cavity 130 and the second water inlet cavity 132 through the water inlet pipe 112. The raw water in the first water inlet cavity 130 flows to the moving water inlet hole 161 and the moving backwash hole 166 through the communication port 164 and the water inlet channel 163. A part of the raw water in the moving water inlet hole 161 flows into the backwash cavity 136 through the fixed backwash hole 177, and then flows into the backwash pipe 182; another part of the raw water in the moving water inlet hole 161 flows into the salt adsorption cavity 134 through the fixed salt adsorption hole 175, and then flows into the jet pipe 181. As such, the pressure of the water in the backwash pipe 182 on the salt adsorption check valve 260 and the pressure of the water in the jet pipe 181 on the salt adsorption check valve 260 reach a balance, and the salt adsorption check valve 260 blocks the communication between the jet pipe 181 and the resin tank 400, while the jet pipe 181 remains communication with the salt box 500. Thus, the water in the salt adsorption cavity 134 is transported to the salt box 500 through the jet pipe 181 to replenish the salt water. The raw water in the moving backwash hole 166 flows into the tank inlet cavity 131 through the fixed tank inlet hole 174, and then is transported to the user end through the water outlet pipe 113.

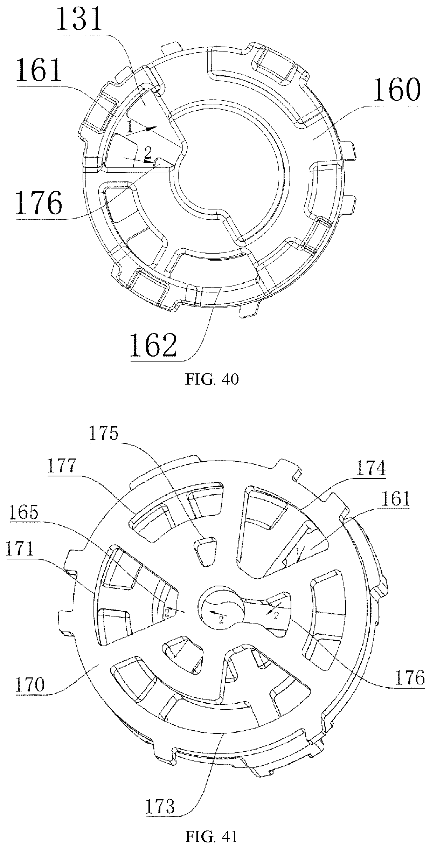

According to some embodiments of the present invention, a water mix area is provided between the service position and the salt adsorption position. When the valve core assembly 140 rotates to the water mix area, the valve core assembly 140 and the valve seat 116 jointly form the service water path and a bypass water path. As shown in FIG. 6, the tank inlet cavity 131, the salt adsorption cavity 134 and the bypass cavity 133 are provided in sequence in the circumferential direction of the valve seat 116, and the service position is adjacent to the salt adsorption position. As shown in FIG. 20 and FIG. 27, the valve core assembly 140 may be switched to the salt adsorption position by rotating a certain angle in a counterclockwise direction shown in the figure from the service position. As shown in FIG. 40, in the water mix area, the moving water inlet hole 161 communicates with the tank inlet cavity 131, the moving water inlet hole 161 communicates with the moving salt adsorption and water distribution hole 165 through the salt adsorption communication cavity 135, and the moving salt adsorption and water distribution hole 165 communicates with the bypass cavity 133. the moving water inlet hole 161 and the tank inlet cavity 131 jointly form the service water path, and the moving water inlet hole 161, the salt adsorption communication cavity 135, the moving salt adsorption and water distribution hole 165 and the bypass cavity 133 jointly form the bypass water path. A part of the raw water input to the soft water valve 100 is transported to the resin tank 400 through the service water path to replace the calcium and magnesium ions in the raw water to produce soft water, and the soft water is transported to the water outlet pipe 113 through the tank outlet pipe 115; another part of the raw water is transported to the water outlet pipe 113 through the bypass water path. As such, in the water mix area, the water output by the water outlet pipe 113 is a mixture of soft water and raw water. In the water mix area, the valve core assembly 140 is adjusted to adjust the opening of the service water path and the bypass water path, so as to adjust the amount of soft water and the amount of raw water in the water outlet pipe 113, and the purpose of adjusting the hardness of the water is achieved.

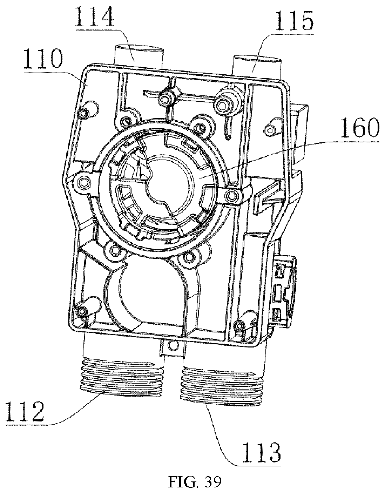

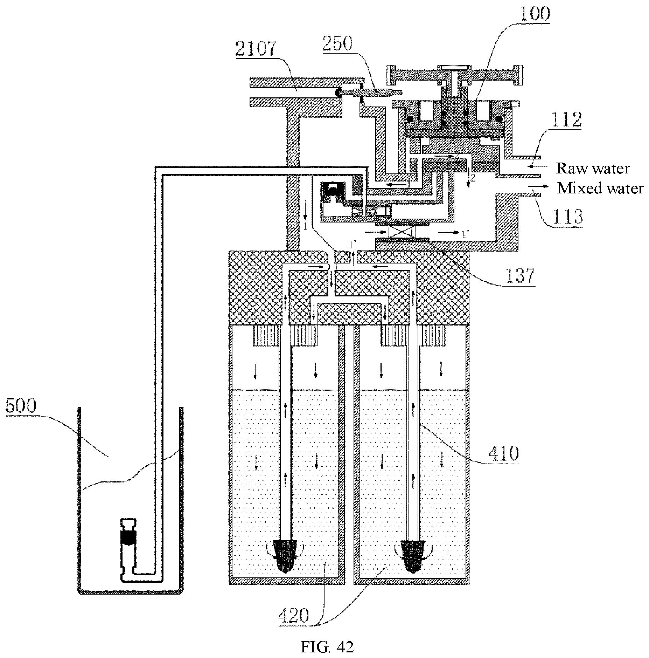

As shown in FIG. 39 to FIG. 42, all the valve core assemblies 140 are located in the water mix areas. Among them, FIG. 39 is a schematic structural diagram of a soft water valve 100, and the arrows in the figure indicate the flow direction of water; FIG. 40 is a schematic diagram of a relative position between a moving plate 160 and a fixed plate 170, and the arrows in the figure indicate the flow direction of water; FIG. 41 is a schematic diagram of a relative position between a moving plate 160 and a fixed plate 170 from another perspective; and FIG. 42 is a cross-sectional view of the water softener.

In the water mix area, the moving water inlet hole 161 communicates with the tank inlet cavity 131 thorough the fixed tank inlet hole 174, the moving water inlet hole 161 communicates with the salt adsorption communication cavity 135 through the fixed salt adsorption communication hole 176, the salt adsorption communication cavity 135 communicates with the moving salt adsorption and water distribution hole 165, and the moving salt adsorption and water distribution hole 165 communicates with the bypass cavity 133 through the fixed bypass hole 171. The moving bypass hole 162 communicates with the second water inlet cavity 132 through the fixed water inlet hole 173. At this point, the raw water is input into the first water inlet cavity 130 and the second water inlet cavity 132 through the water inlet pipe 112. The raw water in the first water inlet cavity 130 flows to the moving water inlet hole 161 through the communication port 164 and the water inlet channel 163, and the raw water in the second water inlet cavity 132 flows to the moving water inlet hole 161 through the fixed water inlet hole 173, the moving bypass hole 162 and the water inlet channel 163.

A portion of the raw water in the water inlet hole flows into the tank inlet cavity 131 through the fixed tank inlet hole 174 (in the flow direction shown by arrows 1 in FIG. 40 and FIG. 41), the raw water in the tank inlet cavity 131 is transported to the inlet of the resin tank 400 through the tank inlet pipe 114 (in the flow direction shown by arrow 1 in FIG. 42), and the raw water enters the resin tank 400 and contacts with the resin to replace the calcium and magnesium ions in the raw water to form soft water. The soft water is output through the center pipe 410 and the outlet of the resin tank 400, and is transported to the water outlet pipe 113 through the tank outlet pipe 115 (in the flow direction shown by arrow 1' in FIG. 42).

Another portion of the raw water in the water inlet hole flows into the moving salt adsorption and water distribution hole 165 through the fixed salt adsorption communication hole 176 and the salt adsorption communication cavity 135, and then flows into the bypass cavity 133 (in the flow direction shown by arrows 2 in FIG. 40 and FIG. 41). The raw water in the bypass cavity 133 flows into the water outlet pipe 113 (in the flow direction shown by arrow 2 in FIG. 42). As such, the water in the water outlet pipe 113 is a mixture of soft water and raw water.

As shown in FIG. 9, an angle between the fixed salt adsorption hole 175 and the bypass cavity 133 is a water mix angle. In the example of FIG. 9, the water mix angle is 35 degrees. The water mix angle may also be other angles. As shown in FIG. 20, during a process that the valve core assembly 140 rotates from the service position to the salt adsorption position in the direction of the arrow, when a rotation angle is less than the water mix angle, the moving salt adsorption and water distribution hole 165 communicates with the bypass cavity 133, and the moving salt adsorption and water distribution hole 165 does not communicate with the salt adsorption cavity 134.

As shown in FIG. 13 to FIG. 15, according to some embodiments of the present invention, the transit connection assembly 200 further includes a transit connection integration seat 210. A first flow path 2101, a second flow path 2102, a salt mixing flow path 2103, a backwash flow path 2104 and a transit connection cavity 2105 are formed inside the transit connection integration seat 210, and an outer peripheral side of the transit connection integration seat 210 corresponding to each flow path is provided with a transit connection port. An end of the first flow path 2101 communicates with the tank inlet pipe 114 through the corresponding transit connection port, another end of the first flow path 2101 communicates with the resin fill portion 420 of the resin tank 400 through the corresponding transit connection port. An end of the second flow path 2102 communicates with the tank outlet pipe 115 through the corresponding transit connection port, an end of the salt mixing flow path 2103 communicates with the jet pipe 181, an end of the backwash flow path 2104 communicates with the backwash pipe 182, and another end of the second flow path 2102, another end of the salt mixing flow path 2103 and another end of the backwash flow path 2104 all communicate with the center pipe 410 of the resin tank 400 through the transit connection cavity 2105. All the second flow path 2102, the salt mixing flow path 2103 and the backwash flow path 2104 communicate with the transit connection cavity 2105. A bottom of the transit connection cavity 2105 is provided with a connect end port, and the connect end port communicates with the center pipe 410 of the resin tube, so that the water path enters the center pipe 410 through the transit connection cavity 2105 at the salt adsorption position (slow wash position), backwash position and water replenishment position, and the reverse circulation water path is formed in the resin tank 400.

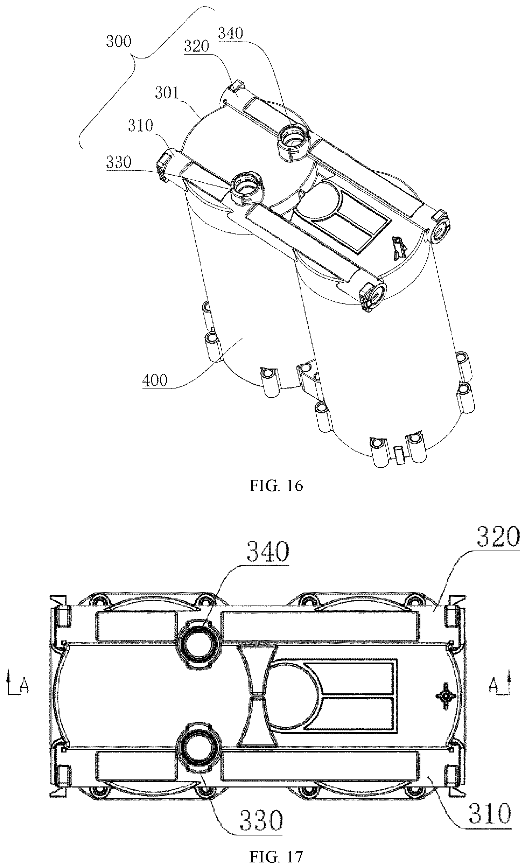

As shown in FIG. 1 and FIG. 16, in a specific arrangement, the transit connection assembly 200 communicates with the resin tank 400 through a water path assembly 300, that is, the water path is guided by the water path assembly 300 to enter the resin tank 400. In this embodiment, all the first flow path 2101, the second flow path 2102, the salt mixing flow path 2103, and the backwash flow path 2104 are flow channel structures formed in the transit connection integration seat 210, their respective flow paths are formed with respective ports on an outer peripheral end surface of the transit connection integration seat 210, each port is provided with a transit connection port, and the soft water valve 100 communicates with the water path assembly 300 through the transit connection port. Among them, two ends of the first flow path 2101 are respectively communicate with the tank inlet pipe 114 and the water path assembly 300 through the corresponding transit connection ports provided at the outer surface of the transit connection integration seat 210, so that the raw water may be guided from the water inlet pipe 112 of the soft water valve 100 into the resin fill portion of the resin tank 400.

As shown in FIG. 13 and FIG. 15, the transit connection cavity 2105 is a cavity formed inside the transit connection integration seat 210, and the transit connection cavity 2105 communicates with all the second flow path 2102, the salt mixing flow path 2103 and the backwash flow path 2104. A bottom of the transit connection cavity 2105 is provided with a port, and the port communicates with the water path assembly 300 or directly communicates with the center pipe 410 of the resin tank 400, so that the water path from the transit connection cavity 2105 directly communicates with the center pipe 410 in the resin tank 400, which realizes the flow of the reverse circulation water path. During a specific arrangement, an end of the second flow path 2102, an end of the salt mixing flow path 2103 and an end of the backwash flow path 2104 are all connected to the corresponding connect port at the soft water valve 100 through corresponding transit connection ports, and different water paths at the soft water valve 100 communicate with the transit connection assembly 200. Another end of the second flow path 2102, another end of the salt mixing flow path 2103 and another end of the backwash flow path 2104 all communicate with the transit connection cavity 2105. The transit connection cavity 2105 may realize the communication between multiple water paths and the center pipe 410 of the resin tank 400, so that the water path may flow out from the second flow path 2102 at the service position, and the soft water is supplied through the water outlet pipe 113the water outlet pipe 113.

An end of the salt mixing flow path 2103 communicates with the valve cavity 111 of the soft water valve 100 through the jet pipe 181. The moving plate 160 and the fixed plate 170 in the valve cavity 111 may realize the switching of water paths, so that the raw water may enter the salt mixing flow path 2103, and may be mixed with the salt water in the salt mixing flow path 2103 and enter the center pipe 410 of the resin tank 400. The salt water entering the center pipe 410 may clean the resin particles and realize the regeneration of the resin particles.

An end of the backwash flow path 2104 communicates with the valve cavity 111 of the soft water valve 100 through the backwash pipe 182. The moving plate 160 and the fixed plate 170 in the valve cavity 111 may realize the switching of water paths, so that the raw water may enter the backwash flow path 2104. The backwash flow path 2104 communicates with the center pipe 410 of the resin tank 400 through the transit connection cavity 2105, so that the raw water may enter through the center pipe 410 to backwash the resin particles and realize the regeneration of the resin particles.

In an embodiment, by the forming the transit connection cavity 2105, multiple flow paths may communicate with the center pipe 410 of the resin tank 400 through one port of the transit connection cavity 2105, which reduces a quantity of ports for connecting each flow path to the center pipe 410 of the resin tank 400, integrates multiple water paths, and reduces the overall space occupied by the water softener.

In a specific arrangement, as shown in FIG. 13, an end of the first flow path 2101, an end of the second flow path 2102, an end of the salt mixing flow path 2103 and an end of the backwash flow path 2104 extend along a same direction, where the first flow path 2101 and the second flow path 2102 are provided side by side. The salt mixing flow path 2103 and the backwash flow path 2104 are provided side by side. In an embodiment, an end of the first flow path 2101, an end of the second flow path 2102, an end of the salt mixing flow path 2103 and an end of the backwash flow path 2104 extend along a same direction, so that the soft water valve 100 and the transit connection assembly 200 may be aligned once to align and communicate multiple flow paths, so as to simplify the connection arrangement of the flow path with the soft water valve 100, and facilitate disassembly and assembly. The first flow path 2101 and the second flow path 2102 are provided side by side, and the salt mixing flow path 2103 and the backwash flow path 2104 are provided side by side. By grouping and arranging flow paths with approximately the same flow rate side by side, the symmetry of the flow path of the transit connection assembly 200 is improved, thereby improving the operational stability of the transit connection assembly 200.

As shown in FIG. 13 and FIG. 29, according to some embodiments of the present invention, the transit connection integration seat 210 further includes a salt adsorption flow path 2106. An end of the salt adsorption flow path 2106 communicates with the salt box 500, another end of the salt adsorption flow path 2106 communicates with the salt mixing flow path 2103, and the salt adsorption flow path 2106 and the salt mixing flow path 2103 are connected at a front end of the transit connection cavity 2105. In an embodiment, the salt adsorption flow path 2106 provides salt water of a certain concentration to the salt mixing flow path 2103, and then mixes with the raw water of the salt mixing flow path 2103, so as to provide the required salt water concentration for resin regeneration. When salt water is required for resin regeneration, the salt adsorption flow path 2106 may effectively introduce salt water into the salt mixing flow path 2103 to ensure full mixing and uniform distribution of the salt water. By connecting the salt adsorption flow path 2106 with the salt mixing flow path 2103, the supply path of salt water is simplified, and the convenience of operation and the efficiency of the device are improved.

As shown in FIG. 14, according to some embodiments of the present invention, the transit connection assembly 200 further includes a jet injector 240. The jet injector 240 is provided at a junction of the salt adsorption flow path 2106 and the salt mixing flow path 2103, so that the jet injector 240 may draw salt water into the salt mixing flow path 2103. In an embodiment, by providing the jet injector 240 in the salt water flow path and the salt mixing flow path 2103, when the raw water passes through the salt mixing flow path 2103, the salt adsorption power is provided for the salt adsorption flow path 2106, so as to reduce the salt adsorption power provided for the salt adsorption flow path 2106 alone, and simplify the overall structure of the water softener device. In addition, the jet injector 240 may mix the salt water and raw water in the salt adsorption flow path 2106 and the salt mixing flow path 2103, which may improve the uniformity and efficiency of the salt water mixing, thereby ensuring that the resin may be fully regenerated and improving the overall treatment effect.

According to some embodiments of the present invention, the wastewater discharge water path 2107 is provided inside the transit connection integration seat 210, and the wastewater discharge water path 2107 communicates with the resin fill portion 420 of the resin tank 400 through the first flow path 2101. In an embodiment, the wastewater discharge water path 2107 communicates with the resin fill portion 420 of the resin tank 400, where water flows from the first flow path 2101 to the resin fill portion 420. Since the resin particles are treated in a backwash mode in this embodiment, that is, the resin particles are treated in a reverse circulation water path, when the resin is cleaned and replaced, the wastewater after the resin is cleaned or the resin particles are replaced is discharged from the end of the resin tank 400 where the raw water enters the resin during normal water softening. By communicating the wastewater discharge water path 2107 with the first flow channel 310, the arrangement of separate wastewater outlet at the resin tank 400 may be reduced, the overall structure and flow path arrangement of the water softener device may be simplified, and the assembly between the soft water valve 100 and the resin tank 400 or the water path assembly 300 may be facilitated.

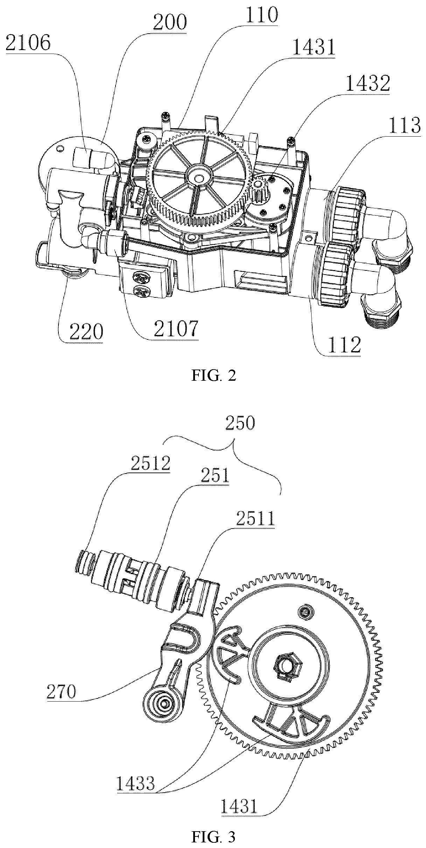

In a specific arrangement, as shown in FIG. 3 and FIG. 14, the wastewater discharge control assembly 250 includes a wastewater discharge pressure rod 251. The wastewater discharge pressure rod 251 is provided with an extrusion end 2511 and a fit seal end 2512 which are axially arranged. The extrusion end 2511 is located inside the driven gear 1431 and may fit with the driving block 1433 to be extruded, and the fit seal end 2512 is located in the wastewater discharge water path 2107. The extrusion end 2511 is configured to cause the fit seal end 2512 to move to open the wastewater discharge water path 2107 after being extruded. In a normal state, the wastewater discharge water path 2107 is closed. Only when wastewater discharge is required, the wastewater discharge water path 2107 is opened for wastewater discharge. In this embodiment, in the normal state, the driving block 1433 does not contact the extrusion end 2511. When wastewater discharge is required, the driven gear 1431 rotates, so that the driving block 1433 abuts against the extrusion end 2511 of the wastewater discharge pressure rod 251. When abutting, the wastewater discharge pressure rod 251 may generate thrust at its own center rod body, so that the center rod body moves. After the center rod body moves, the fit seal end 2512 may be separated from the wastewater discharge water path 2107, and the wastewater discharge water path 2107 is opened. The whole process is controlled by mechanical transmission, which is not affected by factors such as electromagnetic interference, thereby improving the reliability of the device.

In an embodiment, the wastewater discharge pressure rod 251 is provided in the wastewater discharge water path 2107. In the normal state, the wastewater discharge pressure rod 251 may close the wastewater discharge channel. When the wastewater discharge water path 2107 needs to be opened, it is opened by the driving block 1433. In this embodiment, the wastewater discharge pressure rod 251 may be a traditional wastewater discharge pressure rod 251. The traditional wastewater discharge pressure rod 251 includes a rod body, and an end of the rod body is provided with a seal head, that is, the above-mentioned fit seal end 2512. When the wastewater discharge water path 2107 does not need to be opened, the seal head may seal and block it. When the wastewater discharge water path 2107 needs to be opened, it is opened through external force. For the specific wastewater discharge pressure rod 251, those skilled in the art should know its specific structure, and it is not further described.

For example, in a specific application, a position of the driving block 1433 at the driven gear 1431 is configured as the salt adsorption position and controlled by a control system, that is, when the control system sends a signal that salt adsorption is required, the driven gear 1431 may be rotated, and the driving block 1433 abuts against the extrusion end 2511 of the wastewater discharge pressure rod 251 by rotation, so that the wastewater discharge water path 2107 is opened. When the wastewater discharge water path 2107 does not need to be opened, the driven gear 1431 is controlled to rotate so that the driving block 1433 is misaligned with the extrusion end 2511 of the wastewater discharge pressure rod 251, and the wastewater discharge pressure rod 251 may seal and close the wastewater discharge water path 2107 again.

In this embodiment, by providing the driving block 1433 at the driven gear 1431, the wastewater discharge water path 2107 is opened. The overall structure is simple and efficient, and may respond quickly to open the wastewater discharge water path 2107 quickly. And the wastewater discharge water path 2107 is opened by mechanical transmission, which has higher reliability and anti-interference ability.

As shown in FIG. 3, in a specific arrangement, the quantity of the driving block 1433 may be multiple, and the driving blocks 1433 are arranged at intervals. In an overall product, wastewater discharge is generally required in multiple states. In this embodiment, by providing multiple driving blocks 1433 at the driven gear 1431, wastewater discharge is performed in different states, thereby improving the applicability of the wastewater discharge system in this embodiment.

As shown in FIG. 3, the driven gear 1431 is provided with two driving blocks 1433. The two driving blocks 1433 are located at different positions. Through the distribution of different positions, the two driving blocks 1433 may respectively control the opening of the wastewater discharge channel in at least two states. The quantity of the driving blocks 1433 may also be three, four, etc., and the driving blocks 1433 generally correspond to different states by different distribution positions. The drawings of the present invention only illustrate the method of two driving blocks 1433.

In a specific application, the two driving blocks 1433 have the same structure and are made of the same material. The two driving blocks 1433 may also have different structures. In some examples, minimum distances between multiple driving blocks 1433 and the extrusion end 2511 of the wastewater discharge pressure rod 251 are roughly the same. In theory, the minimum distances between the multiple driving blocks 1433 and the pressure rod assembly are equal, but due to processing and assembly, there are often certain errors, and thus the minimum distances may be roughly the same. In an embodiment, the minimum distance may reflect a depth of an action of the wastewater discharge pressure rod 251. Generally, the wastewater discharge pressure rod 251 has a fixed action depth to completely seal the wastewater discharge water path 2107. By limiting the minimum distance to be equal, the wastewater discharge water path 2107 may be stably opened when being opened, and it is ensured that the opening is in a fully open state, thereby improving the stability of the opening.

According to an embodiment provided by the present invention, as shown in FIG. 3, a lever mechanism 270 is provided between the driving block 1433 and the wastewater discharge pressure rod 251, and the lever mechanism 270 amplifies and transmits thrust. The driving block 1433 is provided at the driven gear 1431, and the driven gear 1431 is connected to the rotating shaft 150 to transmit mechanical energy, so that the moving plate 160 rotates to switch water path. In this embodiment, by providing the lever mechanism 270, the service life of the wastewater discharge pressure rod 251 is improved, and the difficulty and cost of maintenance are reduced.

In an embodiment, the driven gear 1431 meshes with the driving gear 1432 and is connected to the rotating shaft 150. The driving block 1433 directly acts at the wastewater discharge pressure rod 251, which makes the driving block 1433 easily damaged. This problem is particularly prominent in the case of a long time. Once the driving block 1433 is damaged, the driven gear 1431 needs to be disassembled, the disassembly of the driven gear 1431 is difficult, and it is easy to cause the valve core assembly 140 to be damaged during the disassembly process. In this embodiment, by providing the lever mechanism 270 between the driving block 1433 and the wastewater discharge pressure rod 251, the transmission is carried out through the intermediate lever mechanism 270, which greatly avoids the damage of the driving block 1433 and prolongs the service life of the driving block 1433. Compared with the disassembly and maintenance of the driven gear 1431, the disassembly of the lever mechanism 270 is simpler, and the maintenance difficulty and cost are lower.

As shown in FIG. 14 and FIG. 29, according to an embodiment provided by the present invention, the transit connection assembly 200 further includes a salt adsorption check valve 260. The salt adsorption check valve 260 is provided inside the transit connection cavity 2105 and is located at a terminal end of the salt mixing flow path 2103. In an embodiment, the salt adsorption check valve 260 may be a one-way valve, a non-return valve or a similar component, which prevents the occurrence of backflow through its working principle to improve the reliability and stability of the water softening device and reduce the possibility of maintenance and failure. By using the salt adsorption check valve 260, the accuracy and continuity of the salt water supply may be ensured, the requirements of resin regeneration may be met, and the overall treatment effect may be improved.

In a specific arrangement, a bottom end of the transit connection integration seat 210 is provided with a first transit connection head 220 and a second transit connection head 230, the first transit connection head 220 communicates with the first flow path 2101, the first flow path 2101 communicates with the resin fill portion 420 in the resin tank 400, the second transit connection head 230 communicates with the transit connection cavity 2105, and each flow path communicates with the center pipe 410 in the resin tank 400. In an embodiment, through the coordinated use of the first transit connection head 220 and the second transit connection head 230, the connection between the transit connection cavity 2105 and the center pipe 410, and the connection between the first flow channel 310 and the resin tank 400 may be easily realized, which improves the flexibility and maintainability of the device.

As shown in FIG. 16 to FIG. 18, according to an embodiment provided by the present invention, the water path assembly 300 includes a main body 301. The main body 301 is connected to the resin tank 400, and the main body 301 includes a first flow channel 310 and a second flow channel 320. The resin tank 400 is located below the first flow channel 310 and the second flow channel 320. The first flow channel 310 is provided with a first connecting end port 330 for fluid input or fluid output, and the second flow channel 320 is provided with a second connecting end port 340 for fluid input or fluid output. The first flow path 2101 communicates with the resin fill portion 420 in the resin tank 400 through the first connecting end port 330, and the transit connection cavity 2105 communicates with the center pipe 410 in the resin tank 400 through the second connecting end port 340. The first flow channel 310 is provided with a first connecting port 350 for communicating with the resin fill portion 420 of the resin tank 400. The first connecting end port 330 is fixedly connected to and communicates with the first flow channel 310, where the first connecting end port 330 is configured for fluid input or fluid output. The second flow channel 320 is provided with a second connecting port 360 for communicating with the center pipe 410 of the resin tank 400. The second connecting end port 340 is fixedly connected to and communicates with the second flow channel 320, where the second connecting end port 340 is configured for fluid input or fluid output. In the design of the water path components, it is necessary to meet the switching of the five functional channels of water supply, backwash, regeneration, water replenishment and forward wash in the water softener. Therefore, the water path components generally integrate multiple flow channels to form an integrated structure, which requires a complex molding mold to construct multiple flow channels. In this embodiment, there are two flow channels, namely the first flow channel 310 and the second flow channel 320, pipes of the two flow channels are respectively provided with communication ports 164, namely the first connecting port 350 and the second connecting port 360, as shown in FIG. 18. The two connect ports may realize that the two flow channels communicate with the resin fill portion 420 and the center pipe 410 in the resin tank 400 respectively. The center pipe 410 in the resin tank 400 and the resin fill portion 420 around the center pipe 410 are separated by their own pipe walls, which enables the two connect ports to communicate with different parts in the resin tank 400 respectively, and thus the flow direction in the resin tank 400 may be switched.

As shown in FIG. 16 to FIG. 18, according to an embodiment of the present invention, the water path assembly 300 includes a main body 301, the main body 301 is provided with a first flow channel 310 and a second flow channel 320, the resin tank 400 is located below the first flow channel 310 and the second flow channel 320, and the soft water valve 100 and the transit connection assembly 200 are located above the first flow channel 310 and the second flow channel 320. When the soft water valve 100 is in operation, it needs to function through the reaction generated by the resin particles in the resin tank 400. In this embodiment, the resin tank 400 is provided below the flow channel to facilitate the overall layout, and the water path facilitates the water flow to fully contact with the resin particles by flowing downward and upward, thereby improving the treatment effect.

In a specific example, as shown in FIG. 1, the main body 301 is roughly a plate-like structure, the first flow channel 310 and the second flow channel 320 are respectively located at the main body 301, a first side is an upper surface side of the main body 301, and a second side is a lower surface side of the main body 301. The compact layout of the overall structure is achieved through the layout in the vertical direction B, and the space occupied in the thickness direction A is significantly reduced.

As shown in FIG. 17 and FIG. 18 , according to an embodiment of the present invention, the connect end port includes a first connecting end port 330 and a second connecting end port 340, the first connecting end port 330 communicates with the first flow channel 310, the second connecting end port 340 communicates with the second flow channel 320, the transit connection assembly 200 communicates with the resin fill portion 420 in the resin tank 400 through the first connecting end port 330, and the transit connection assembly 200 communicates with the center pipe 410 in the resin tank 400 through the second connecting end port 340. As can be seen from the accompanying drawings and the following, the first flow path 2101 communicates with the resin fill portion 420 in the resin tank 400 through the first connecting end port 330, and the transit connection cavity 2105 communicates with the center pipe 410 in the resin tank 400 through the second connecting end port 340. The first flow channel 310 is provided with a first connecting port 350 for communicating with the resin fill portion 420 of the resin tank 400. The first connecting end port 330 is fixedly connected to and communicates with the first flow channel 310, where the first connecting end port 330 is configured for fluid input or fluid output. The second flow channel 320 is provided with a second connecting port 360 for communicating with the center pipe 410 of the resin tank 400. The second connecting end port 340 is fixedly connected to and communicates with the second flow channel 320, where the second connecting end port 340 is configured for fluid input or fluid output. In the design of the water path components, it is necessary to meet the switching of the five functional channels of water supply, backwash, regeneration, water replenishment and forward wash in the water softener. Therefore, the water path components generally integrate multiple flow channels to form an integrated structure, which requires a complex molding mold to construct multiple flow channels. In this embodiment, there are two flow channels, namely the first flow channel 310 and the second flow channel 320, pipes of the two flow channels are respectively provided with communication ports 164, namely the first connecting port 350 and the second connecting port 360, as shown in FIG. 18. The two connect ports may realize that the two flow channels communicate with the resin fill portion 420 and the center pipe 410 in the resin tank 400 respectively. The center pipe 410 in the resin tank 400 and the resin fill portion 420 around the center pipe 410 are separated by their own pipe walls, which enables the two connect ports to communicate with different parts in the resin tank 400 respectively, and thus the flow direction in the resin tank 400 may be switched.

In this embodiment, the first flow channel 310 and the second flow channel 320 are respectively configured for the input or output of liquid fluid, and the input or output is determined by the soft water valve 100 connected thereto for control selection. In an embodiment, a soften water path in the soft water process needs to be satisfied in the soft water valve 100, and a regenerate path for the resin particle treatment in a resin barrel also needs to be satisfied. For example, when softening, the raw water enters the first flow channel 310 through the first connecting port 350, and is softened by the resin particles in the resin tank 400. The treated water rises through the center pipe 410 and is output from the second connecting port 360 through the second flow channel 320. At this point, the first connecting port 350 is configured for the input of the fluid, and the second connecting port 360 is configured for the output of the fluid. During regeneration, the salt water enters the second flow channel 320 through the second connecting port 360, and enters the bottom of the resin tank 400 through the center pipe 410. The salt water entering the bottom may rise along the outer portion of the resin tank 400 to clean the resin particles, and then enters the first flow channel 310 and is output from the first connecting port 350 in the first flow channel 310. At this point, the first connecting port 350 is configured for fluid output, and the second connecting port 360 is configured for fluid input.

In this embodiment, the switching of the soften water path and the regenerate water path is realized through two flow channels, which simplifies the structure and the quantity of flow channels, makes the overall structure simple, and reduces the difficulty of preparation.

As shown in FIG. 16, in a specific arrangement, both the water path assembly 300 and the resin tank 400 are made of plastic material. The plastic material is easy to mold and is conducive to the construction of the flow channels and the construction of complex shapes. In addition, the integrated molding of the plastic material may combine plastics of various materials together, so that the overall structure is compact and seamless.

In a specific application, as shown in FIG. 18, the first connecting port 350 is a truncated port, and an opening cross section of the first connecting port 350 in the cross-sectional direction of the resin tank 400 is less than or equal to an overlap surface of the first flow channel 310 and the resin fill portion 420 in the cross section. The basic function of the water softener may be realized by communicating the water channels with the resin tank 400, that is, the raw water may enter the resin tank 400 through the first flow channel 310 to flow forward to realize the softening function, and the salt water may also return to the mixed salt flow channel from the first flow channel 310 and enter the center pipe 410 to realize the reverse flow and other functions. In this embodiment, the first connecting port 350 is opened along an extension direction of the first flow channel 310, as long as the opened truncated port does not exceed the corresponding range of the resin tank 400, which makes the size of the first connecting port 350 to be unlimited, and thus when the raw water is distributed through the first connecting port 350, the water distribution effect is not affected by the opening size.

As shown in FIG. 18, in this embodiment, a part of the entity forming the first flow channel 310 spans above the resin tank 400, so that the first flow channel 310 and the resin tank 400 have intersecting planes in a horizontal direction, and the intersecting plane is the above-mentioned cross section. That is, a part of the entity structure of the first flow channel 310 is located inside the resin tank 400, and the outer part of the resin tank 400 is the resin fill portion 420 filled with resin particles. The first connecting port 350 may be opened with an opening of any size on the entity part located inside the resin tank 400, so that it is not limited by the inner diameter of the first flow channel 310, and even at a first flow channel 310 with a smaller inner diameter, it may open a first connecting port 350 with larger size along its own extension direction, thereby meeting the high-quality water distribution effect.

Specifically, in this embodiment, since part of wall body forming the first flow channel 310 spans over the resin tank 400, and a first connecting port 350 is opened at the wall above the resin tank 400, a portion of a side of the wall body facing the resin tank 400 may be a notch structure. At this point, a size of the first connecting port 350 is equal to an overlapped part of the wall body and the resin fill portion 420 in the resin tank 400, which increases the contact area between the first connecting port 350 and the resin fill portion 420 of the resin tank 400, thereby improving the water distribution effect of the raw water entering the resin tank 400 from the first connecting port 350, enabling the water body to fully contact with the resin, and improving the softening efficiency and softening quality of the water body.

According to an embodiment provided by the present invention, multiple resin tanks 400 are connected to the main body 301, the multiple resin tanks 400 are arranged in parallel and spaced apart along an extension direction of the first flow channel 310 or an extension direction of the second flow channel 320, and both the first connecting end port 330 and the second connecting end port 340 are located at an identical resin tank 400. The resin tank 400 is configured to load resin, and the amount of loaded resin directly affects the treatment effect on water quality. In the related art, due to the influence of the assembly method, it is generally configured as one resin tank 400, and one resin tank 400 needs to have a larger volume if it needs to be loaded with more resin particles, which makes the entire component occupy a large space in the width direction, thereby making the overall structure complex and not conducive to mounting. In this embodiment, the manner of multiple resin tanks 400 may make it narrower in the width direction while having the same volume, which may facilitate the assembly of components.

In a specific arrangement, as shown in FIG. 1 and FIG. 18, in this embodiment, there are two resin tanks 400, and the two resin tanks 400 are arranged in parallel. When determining the quantity of resin tanks 400, requirement for the water treatment capacity of the entire water path plate and the design of the space occupation of the overall structural are generally taken into consideration. Therefore, three, four or more resin tanks 400 may be selected in some specific designs. In an embodiment, when adding resin tanks 400, the flow channel is arranged in the length direction to communicate with the resin tank 400 and form a water path. The drawings in the present invention only specifically illustrate the example of two resin tanks 400.

As shown in FIG. 17, both the first flow channel 310 and the second flow channel 320 extend along a horizontal straight direction. Correspondingly, the resin tank 400 is arranged in parallel in a horizontal straight direction. The fluids in the first flow channel 310 and the second flow channel 320 may enter the resin tank 400 for processing, and then output or input through the first connecting end port 330 and the second connecting end port 340 to realize the positive circulation water path flow direction or the reverse circulation water path flow direction.

In a specific arrangement, as shown in FIG. 1, both the first connecting end port 330 and the second connecting end port 340 are provided with quick plug holes, and a quick plug member is provided inside the quick plug hole. Both the first connecting end port 330 and the second connecting end port 340 are connected to the transit connection assembly 200 through the quick plug members. Generally, the water softener is in a relatively small space after mounting, which makes assembly and disassembly difficult. In this embodiment, the connection is realized by a quick plug connection manner, which may facilitate assembly and disassembly.

In a specific arrangement, there are many kinds of quick plug connection members, such as quick connectors, quick rotating connectors, quick clamp connection members and compress connectors commonly used in pipeline connection. In this embodiment, by providing a plug hole at the first connecting end port 330, providing a connector at the transit connection assembly 200, and opening an annular snap slot at the connector, the connector is inserted into the first connecting end port 330, and then inserted into the plug hole through a snap sheet, a part of the snap sheet is located in the annular snap slot, thereby realizing a quick plug connection between the transit connection assembly 200 and the connect end port. In the working state, the snap sheet is located in the snap slot for snap connection, and the snap sheet may be removed when disassembly is required to complete the disassembly, which simplifies the entire assembly and disassembly process.

As shown in FIG. 16 and FIG. 18, according to an embodiment provided by the present invention, the resin tank 400 and the water path assembly 300 are integrally formed. The resin tank 400 includes a tank body and a cover body, the tank body is provided with an accommodate cavity and a mount opening communicating with the accommodate cavity. The cover body covers the mount opening to connect the cover body and the tank body. After the tank body of the resin tank 400 is integrally formed with the water path assembly 300, an upper part of the tank body and the water path assembly 300 are in an integral structural state. In order to facilitate the mounting of a water distributor and filling of the resin particles, the cover body structure is provided, and the cover body structure may seal the resin tank 400.

The tank body is generally arranged in a hollow cylindrical shape, and the accommodate cavity is formed inside the tank body, where the accommodate cavity is the main part of the resin tank 400 assembly and is configured to store resin. According to application requirements, the accommodate cavity may be designed to have different shapes and sizes to adapt to different resin volumes and performance requirements, which is not specifically limited here.

In an embodiment, the resin tank 400 assembly may include one or more tank bodies, and the tank bodies are arranged in parallel. For the convenience of mounting, the mount openings of the tank bodies are aligned and arranged toward the same side.

In a specific application, an end surface of an end of the tank body is provided with a tank mouth, and a tank mouth end is integrally formed with the water path assembly 300. The tank mouth is configured to allow and control the fluid to flow into and out of the accommodate cavity. A size and shape of the tank mouth may be adjusted according to actual needs to optimize the flow properties of the resin. The water path plate or a pump body is provided with a communication port 164 communicating with the tank mouth, so as to realize the water path communication between the tank body and the water path plate or the pump body. An end portion of an end of the tank body away from the water path assembly 300 is provided with the mount opening, which may, on the one hand, facilitate the arrangement of the forming process of the tank body, and, on the other hand, facilitate the assembly and arrangement of other components of the tank body, such as a water distributor. An outer periphery of an end portion of an end of the tank body where the mount opening is provided is provided with a bolt hole.

As shown in FIG. 18, the cover body covers the mount opening to seal and block the mount opening to ensure the relative sealing performance of the accommodating cavity, and the cover body and the tank body are connected and fixed axially by connect members such as screws. In an embodiment, during the use of the resin tank 400 assembly, since the internal soften flow path requires a certain pressure to be pushed, when the tank mouth or the accommodating cavity is axially arranged, the resin tank 400 assembly forms an open force to the cover body and the tank body when working, and under the condition of unstable water pressure and the repeated action of the open force, the cover body and the tank body may be stably connected through the connection of bolts.

Through the description of the above embodiments, those skilled in the art may clearly understand that, in the embodiments, the transmission mechanism 141 is driven by one drive device, and the transmission mechanism 141 may, on the one hand, control the valve core assembly 140 to switch the water paths, and, on the other hand, control the opening of the wastewater discharge water path 2107 in the transit connection assembly 200 through the fitting between the transmission mechanism 141 and the transit connection assembly 200, thereby realizing the control of the entire water path, simplifying the control logic, improving the control efficiency, reducing the arrangement of the device, and reducing the failure rate of the water path control assembly. Further, the wastewater discharge control assembly 250 is a wastewater discharge pressure rod 251, and the wastewater discharge pressure rod 251 opens the wastewater discharge water path 2107 by extruding with the driving block 1433 at the driven gear 1431, which is realized by mechanical transmission. The structure of the entire switch is simple, and the reliability and stability are strong.

According to an embodiment provided by the present invention, a wastewater discharge control assembly 250 and a wastewater discharge water path 2107 are provided inside the transit connection assembly 200, and the wastewater discharge control assembly 250 is provided in the wastewater discharge water path 2107. The wastewater discharge control assembly 250 is configured to control the on and off of the wastewater discharge water path 2107. The driving portion 142 is configured to drive the transmission mechanism 141 to control the opening of the wastewater discharge water path 2107. The transmission mechanism 141 includes a driving gear 1432, a driven gear 1431 and a rotating shaft 150. The driving gear 1432 is provided at an output end of the driving portion 142. The driven gear 1431 meshes with the driving gear 1432, the driven gear 1431 is provided with at least one driving block 1433, and the driving block 1433 is configured to fit with the wastewater discharge control assembly 250 to open the wastewater discharge water path 2107. The rotating shaft 150 is connected to the driven gear 1431. The rotating shaft 150 is connected to the valve core assembly 140 to drive the valve core assembly 140 to switch the water paths. The wastewater discharge control assembly 250 opens the wastewater discharge water path 2107 through the driving block 1433 at the driven gear 1431. Specifically, when the wastewater discharge water path 2107 needs to be opened, the driven gear 1431 rotates so that the driving block 1433 may extrude the wastewater discharge control assembly 250, and the wastewater discharge water path 2107 is opened. For example, at the salt adsorption position, the salt adsorption water path is in the connected state, and the soft water valve 100 may transport the salt water in the salt box 500 to the resin tank 400. The salt water is used to replace the calcium and magnesium ions adsorbed on the resin to restore the resin, so that the resin may continue to adsorb calcium and magnesium ions. The wastewater after restoring the resin enters the wastewater discharge water path 2107 through the transit connection assembly 200. At this point, the driving block 1433 extrudes the wastewater discharge control assembly 250 to open the wastewater discharge water path 2107 to directly discharge the wastewater. Thus, one driving portion 142 may drive to switch the water paths to control the opening of the wastewater discharge water path 2107, which simplifies the control logic.

In a specific arrangement, as shown in FIG. 5, the driving portion 142 is a driving motor, and the driving motor is fixedly connected to the valve body 110. The driving motor may be fixedly connected to the valve body 110 by screws. The driven gear 1431 is larger than the driving gear 1432. The two gears are meshed. The driving motor drives the driving gear 1432 to rotate, the driving gear 1432 drives the driven gear 1431 to rotate, and the driven gear 1431 drives the rotating shaft 150 to rotate, thereby driving the moving plate 160 in the valve core assembly 140 to rotate. A transmission ratio between the driving gear 1432 and the transmission gear is greater than 1, that is, a quantity of teeth of the driving gear 1432 is greater than a quantity of teeth of the transmission gear, so as to amplify the driving torque, thereby providing sufficient power to drive the rotating shaft 150 and the moving plate 160 to rotate.

Finally, it should be noted that the above embodiments are only used to illustrate the solutions of the present invention, rather than to limit them. Although the present invention is described in detail with reference to the above embodiments, those of ordinary skill in the art should understand that they can still modify the solutions recited in the above embodiments, or replace some of the features therein by equivalents; and these modifications or replacements do not make the essence of the corresponding solutions deviate from the scope of the solutions of the embodiments of the present invention.

## Claims

1. A water softener, comprising:
a soft water valve (100) comprising a valve body (110), a valve core assembly (140), a driving portion (142) and a transmission mechanism (141), wherein both the valve core assembly (140) and the driving portion (142) are provided inside the valve body (110), and the driving portion (142) is connected to the valve core assembly (140) through the transmission mechanism (141) in a transmission manner, the valve core assembly (140) switching water paths under drive of the driving portion (142);
a transit connection assembly (200) communicating with the soft water valve (100) and located alongside the soft water valve (100), wherein the transit connection assembly (200) is provided with a wastewater discharge water path (2107), the transit connection assembly (200) fitting with the transmission mechanism (141), and the driving portion (142) configured to drive the transmission mechanism (141) to control opening of the wastewater discharge water path (2107);
a water path assembly (300) communicating with the transit connection assembly (200), and configured to guide flow of a water path; and
a resin tank (400) fixedly connected to the water path assembly (300), and configured to soften water flowing through the resin tank (400).

2. The water softener of claim 1, wherein a valve cavity (111) is provided inside the valve body (110), and the valve body (110) provided with a water inlet pipe (112), a water outlet pipe (113), a tank inlet pipe (114) and a tank outlet pipe (115), each communicating with the valve cavity (111), wherein a valve seat (116) is provided inside the valve cavity (111); and
the valve core assembly (140) is provided at the valve seat (116) and located inside the valve cavity (111), the valve core assembly (140) switching among a service position, a salt adsorption position, a bypass position, a backwash position and a water replenishment position with respect to the valve seat (116), and the valve core assembly (140) and the valve seat (116) forming a service water path, a salt adsorption water path, a bypass water path, a backwash water path and a water replenishment water path.

3. The water softener of claim 2, wherein an outer peripheral wall of the valve seat (116) and an inner peripheral wall of the valve cavity (111) form a first water inlet cavity (130), and a tank inlet cavity (131) and a second water inlet cavity (132) separated from each other are provided inside the valve seat (116), the tank inlet cavity (131) communicating with the tank inlet pipe (114), the water inlet pipe (112) communicating with both the first water inlet cavity (130) and the second water inlet cavity (132); and
a bypass cavity (133) is provided inside the valve seat (116), the bypass cavity (133) communicating with the water outlet pipe (113) and separated from the second water inlet cavity (132).

4. The water softener of claim 3, wherein the water outlet pipe (113) communicates with the tank outlet pipe (115) via a bypass check valve (137), the tank outlet pipe (115) unidirectionally communicating with the water outlet pipe (113); and
a position where the bypass cavity (133) communicates with the water outlet pipe (113) is between the bypass check valve (137) and an outlet of the water outlet pipe (113).

5. The water softener of claim 3 or 4, wherein a wastewater discharge control assembly (250) is provided inside the transit connection assembly (200), the wastewater discharge control assembly (250) provided in the wastewater discharge water path (2107)and configured to control on and off of the wastewater discharge water path (2107), the transmission mechanism (141) comprising:
a driving gear (1432) provided at an output end of the driving portion (142);
a driven gear (1431) meshing with the driving gear (1432), wherein the driven gear (1431) is provided with at least one driving block (1433), the driving block (1433) configured to fit with the wastewater discharge control assembly (250) to open the wastewater discharge water path (2107); and
a rotating shaft (150) connected to the driven gear (1431),
wherein the rotating shaft (150) is connected to the valve core assembly (140) to drive the valve core assembly (140) to switch water paths.

6. The water softener of claim 5, wherein the valve core assembly (140) comprises:
a moving plate (160) fixedly connected to the rotating shaft (150), wherein the rotating shaft (150) drives the moving plate (160) to rotate, the moving plate (160) provided at the valve seat (116), the moving plate (160) fitting with the valve seat (116) to form the service water path, the salt adsorption water path, the bypass water path, the backwash water path and the water replenishment water path.

7. The water softener of claim 6, wherein the moving plate (160) is provided with a moving water inlet hole (161) and a moving bypass hole (162) separated from each other;
at the service position, the first water inlet cavity (130) and the second water inlet cavity (132) communicate with the tank inlet cavity (131) through the moving water inlet hole (161), and the first water inlet cavity (130), the second water inlet cavity (132), the moving water inlet hole (161) and the tank inlet cavity (131) form the service water path;
at the bypass position, the first water inlet cavity (130) and the second water inlet cavity (132) communicate with the bypass cavity (133) through the moving bypass hole (162), and the first water inlet cavity (130), the second water inlet cavity (132), the moving bypass hole (162) and the bypass cavity (133) form the bypass water path.

8. The water softener of claim 7, wherein a surface of the moving plate (160) facing away from the valve seat (116) is provided with a water inlet channel (163), one end of the water inlet channel (163) communicating with the moving water inlet hole (161), the other end of the water inlet channel (163) communicating with the first water inlet cavity (130).

9. The water softener of claim 8, wherein the water inlet channel (163) communicates with the first water inlet cavity (130) through multiple communication ports (164), the multiple communication ports (164) spaced apart along a circumferential direction of the moving plate (160).

10. The water softener of any of claims 7 to 9, wherein the valve seat (116) is provided with a salt adsorption cavity (134) and a salt adsorption communication cavity (135) separated from each other;
the moving plate (160) is provided with a moving salt adsorption and water distribution hole (165), the moving salt adsorption and water distribution hole (165) is provided at a surface of the moving plate (160) facing the valve seat (116), the moving water inlet hole (161) penetrates through the moving plate (160) along a thickness direction of the moving plate (160), and the moving salt adsorption and water distribution hole (165) is separated from the moving water inlet hole (161);
at the salt adsorption position, the moving water inlet hole (161) communicates with the moving salt adsorption and water distribution hole (165) through the salt adsorption communication cavity (135), the moving salt adsorption and water distribution hole (165) communicates with the salt adsorption cavity (134) and the bypass cavity (133), the moving water inlet hole (161), the salt adsorption communication cavity (135), the moving salt adsorption and water distribution hole (165) and the salt adsorption cavity (134) form the salt adsorption water path, and the moving water inlet hole (161), the salt adsorption communication cavity (135), the moving salt adsorption and water distribution hole (165) and the bypass cavity (133) form the bypass water path.

11. The water softener of claim 10, wherein the wastewater discharge water path (2107) selectively communicates with the tank outlet pipe (115), the wastewater discharge water path (2107) communicating with the tank outlet pipe (115) at the salt adsorption position.

12. The water softener of claim 10 or 11, wherein the salt adsorption cavity (134) selectively communicates with a salt box (500), and
at the salt adsorption position:
the salt adsorption cavity (134) communicates with the salt box (500), the soft water valve (100) being in a salt adsorption mode; and
the salt adsorption cavity (134) disconnected from the salt box (500), the soft water valve (100) being in a slow wash mode.

13. The water softener of any of claims 10 to 12, further comprising a jet pipe (181) connected to the valve body (110), the jet pipe (181) communicating with the salt adsorption cavity (134).

14. The water softener of claim 13, wherein the valve seat (116) is provided with a water replenishment cavity separated from the salt adsorption cavity (134), the water replenishment cavity communicating with a water replenishment pipe, a salt adsorption check valve (260) provided between the water replenishment pipe and the jet pipe (181), the salt adsorption check valve (260) being unidirectionally communicated based on a pressure difference between the water replenishment pipe and the jet pipe (181); and
at the water replenishment position, the moving water inlet hole (161) communicates with the water replenishment cavity and the salt adsorption cavity (134), the pressure difference between the water replenishment pipe and the jet pipe (181) is zero, the salt adsorption cavity (134) replenishes water into the salt box (500) through the jet pipe (181), and the moving water inlet hole (161), the water replenishment cavity, the salt adsorption cavity (134), and the jet pipe (181) form the water replenishment water path.

15. The water softener of any of claims 7 to 14, wherein the moving plate (160) is provided with a moving backwash hole (166) penetrating through the moving plate (160) along a thickness direction of the moving plate (160), a backwash cavity (136) provided inside the valve seat (116), the valve body (110) provided with a backwash pipe (182), and the backwash pipe (182) communicating with the backwash cavity (136); and
at the backwash position, the backwash cavity (136) communicates with the moving bypass hole (162), and the moving backwash hole (166) communicates with the bypass cavity (133), to form the backwash water path.

16. The water softener of any of claims 6 to 15, wherein the valve core assembly (140) further comprises:
a fixed plate (170) attached to the valve seat (116), wherein the moving plate (160) is rotatable with respect to the fixed plate (170), the fixed plate (170) provided with a fixed bypass hole (171) corresponding to and communicating with the bypass cavity (133), the moving plate (160) fitting with the fixed plate (170) and the valve seat (116) to form the service water path, the salt adsorption water path, the bypass water path, the backwash water path and the water replenishment water path.

17. The water softener of claim 16, wherein a seal washer (180) is provided between the fixed plate (170) and the valve seat (116), the seal washer (180) being the same as the fixed plate (170) in shape.

18. The water softener of claim 16 or 17, wherein an inner wall of the valve cavity (111) is provided with a first fixing portion (1111), a periphery of the fixed plate (170) provided with a second fixing portion (172), the second fixing portion (172) snapped with the first fixing portion (1111) to limit the fixed plate (170) in a circumferential direction, one of the second fixing portion (172) or the first fixing portion (1111) being a slot body, another of the second fixing portion (172) or the first fixing portion (1111) being a protrusion.

19. The water softener of any of claims 6 to 18, wherein the driving portion (142) comprises:
a driving motor, wherein the driving motor is fixedly connected to the valve body (110), an output end of the driving motor fixedly connected to the driving gear (1432).

20. The water softener of any of claims 6 to 19, wherein the valve body (110) comprises:
a valve body portion, wherein the valve cavity (111) is provided inside the valve body portion, a side of the valve cavity (111) being open; and
a valve plug cover (118) covering an open end of the valve cavity (111), wherein the rotating shaft (150) penetrates though the valve plug cover (118), the driven gear (1431) located outside the valve cavity (111).

21. The water softener of claim 20, wherein the valve body (110) further comprises a control panel (119) sleeved at the rotating shaft (150) and located between the valve plug cover (118) and the driven gear (1431), the control panel (119) is provided with a Hall sensor (1191), and the driven gear (1431) is provided with a magnetic member, the Hall sensor (1191) configured to sense a position of the magnetic member.

22. The water softener of any of claims 6 to 21, wherein the rotating shaft (150) comprises a vertical shaft (151) and a connecting disk (152), one end of the vertical shaft (151) connected to the driving portion (142), the connecting disk (152) provided at the other end of the vertical shaft (151), and the connecting disk (152) stacked with and fixedly connected to the moving plate (160).

23. The water softener of claim 22, wherein the connecting disk (152) is provided with a first engaging portion (153), the moving plate (160) provided with a second engaging portion (167) fitting with the first engaging portion (153), one of the first engaging portion (153) or the second engaging portion (167) being a slot body, the other one of the first engaging portion (153) or the second engaging portion (167) being a protrusion.

24. The water softener of claim 15, wherein the transit connection assembly (200) further comprises:
a transit connection integration seat (210), wherein a first flow path (2101), a second flow path (2102), a salt mixing flow path (2103), a backwash flow path (2104) and a transit connection cavity (2105) are provided inside the transit connection integration seat (210), wherein an outer peripheral side of the transit connection integration seat (210) corresponding to each flow path is provided with a transit connection port;
one end of the first flow path (2101) communicates with the tank inlet pipe (114) through the corresponding transit connection port, and the other end of the first flow path (2101) communicates with a resin fill portion (420) of the resin tank (400) through the corresponding transit connection port; and
one end of the second flow path (2102) communicates with the tank outlet pipe (115) through the corresponding transit connection port, one end of the salt mixing flow path (2103) communicates with the jet pipe (181), one end of the backwash flow path (2104) communicates with the backwash pipe (182), and the other end of the second flow path (2102), the other end of the salt mixing flow path (2103) and the other end of the backwash flow path (2104) all communicate with a center pipe (410) of the resin tank (400) through the transit connection cavity (2105).

25. The water softener of claim 24, wherein the transit connection integration seat (210) further comprises a salt adsorption flow path (2106), one end of the salt adsorption flow path (2106) communicating with the salt box (500), the other end of the salt adsorption flow path (2106) connected to the salt mixing flow path (2103), both the salt adsorption flow path (2106) and the salt mixing flow path (2103) connected at a front end of the transit connection cavity (2105).

26. The water softener of claim 24 or 25, wherein the transit connection assembly (200) further comprises a jet injector (240) provided at a junction of the salt adsorption flow path (2106) and the salt mixing flow path (2103), wherein the jet injector (240) is able to adsorb salt water into the salt mixing flow path (2103).

27. The water softener of any of claims 24 to 26, wherein the wastewater discharge water path (2107) is provided inside the transit connection integration seat (210), the wastewater discharge water path (2107) communicating with the resin fill portion (420) of the resin tank (400) through the first flow path (2101).

28. The water softener of any of claims 6 to 27, wherein the wastewater discharge control assembly (250) comprises a wastewater discharge pressure rod (251) provided with an extrusion end (2511) and a fit seal end (2512) axially arranged, the extrusion end (2511) located inside the driven gear (1431) and being fittable with the driving block (1433) to be extruded, the fit seal end (2512) located inside the wastewater discharge water path (2107), the extrusion end (2511) configured to cause the fit seal end (2512) to move and open the wastewater discharge water path (2107) after being extruded.

29. The water softener of any of claims 24 to 27, wherein the transit connection assembly (200) further comprises a salt adsorption check valve (260) provided inside the transit connection cavity (2105) and located at a terminal end of the salt mixing flow path (2103).

30. The water softener of any of claims 24 to 27, wherein the water path assembly (300) comprises:
a main body (301) connected to the resin tank (400), wherein the main body (301) comprises a first flow channel (310) and a second flow channel (320), the resin tank (400) located below the first flow channel (310) and the second flow channel (320);
the first flow channel (310) is provided with a first connecting end port (330) for fluid input or fluid output, the second flow channel (320) is provided with a second connecting end port (340) for fluid input or fluid output, the first flow path (2101) communicates with the resin fill portion (420) in the resin tank (400) through the first connecting end port (330), and the transit connection cavity (2105) communicates with the center pipe (410) in the resin tank (400) through the second connecting end port (340).

31. The water softener of claim 30, wherein the main body (301) is connected to multiple resin tanks (400) provided in parallel and spaced apart along an extension direction of the first flow channel (310) or an extension direction of the second flow channel (320), both the first connecting end port (330) and the second connecting end port (340) located at an identical resin tank (400).

32. The water softener of claim 30 or 31, wherein both the first connecting end port (330) and the second connecting end port (340) are provided with a quick plug hole, wherein a quick plug member is provided inside the quick plug hole, both the first connecting end port (330) and the second connecting end port (340) connected to the transit connection assembly (200) through the quick plug member.

33. The water softener of any of claims 1 to 32, wherein the resin tank (400) is integrally formed with the water path assembly (300); the resin tank (400) comprising:
a tank body provided with a accommodate cavity and a mount opening communicating with the accommodate cavity; and
a cover body covering the mount opening to connect the cover body and the tank body.

34. A water softener, comprising:
a soft water valve (100), comprising a valve body (110), a valve core assembly (140), a driving portion (142) and a transmission mechanism (141), wherein both the valve core assembly (140) and the driving portion (142) are provided inside the valve body (110), the driving portion (142) connected to the valve core assembly (140) through the transmission mechanism (141) in a transmission manner, the valve core assembly (140) switching water paths under drive of the driving portion (142);
a transit connection assembly (200) connected to the soft water valve (100) and located alongside the soft water valve (100);
a water path assembly (300) provided with a connect end port for fluid input or fluid output, wherein the connect end port communicates with the transit connection assembly (200), the water path assembly (300) configured to guide flow of a water path; and
a resin tank (400) fixedly connected to the water path assembly (300), wherein the resin tank (400) is configured to soften water flowing through the resin tank (400);
the water path assembly (300) is provided with a first side and a second side opposite to each other, the soft water valve (100) and the transit connection assembly (200) are provided at the first side, and the resin tank (400) is provided at the second side.

35. The water softener of claim 34, wherein the transit connection assembly (200) is connected to the water path assembly (300) through the connect end port, the connect end port being offset at one end of the first side, wherein a mount space is formed between the connect end port and the other end of the first side, the soft water valve (100) and the transit connection assembly (200) mounted inside the mount space.

36. The water softener of claim 34 or 35, wherein the connect end port comprises a first connecting end port (330) and a second connecting end port (340), the water path assembly (300) comprising:
a main body (301), wherein the main body (301) comprises a first flow channel (310) and a second flow channel (320), the first connecting end port (330) communicating with the first flow channel (310), the second connecting end port (340) communicating with the second flow channel (320), the transit connection assembly (200) communicating with a resin fill portion (420) in the resin tank (400) through the first connecting end port (330), the transit connection assembly (200) communicating with a center pipe (410) in the resin tank (400) through the second connecting end port (340).

37. The water softener of claim 36, wherein the resin tank (400) is located below the first flow channel (310) and the second flow channel (320), the soft water valve (100) and the transit connection assembly (200) located above the first flow channel (310) and the second flow channel (320).

38. The water softener of claim 36 or 37, wherein both the first connecting end port (330) and the second connecting end port (340) are provided with a quick plug hole, a quick plug member provided inside the quick plug hole, both the first connecting end port (330) and the second connecting end port (340) connected to the transit connection assembly (200) through the quick plug member.

39. The water softener of any of claims 36 to 38, wherein the main body (301) is connected to multiple resin tanks (400) provided in parallel and spaced apart along an extension direction of the first flow channel (310) or an extension direction of the second flow channel (320), the connect end port located at an identical resin tank (400).

40. The water softener of any of claims 36 to 39, wherein the resin tank (400) comprises:
a tank body, wherein an end of the tank body is fixedly connected to the main body (301), the tank body provided with a accommodate cavity and a mount opening communicating with the accommodate cavity; and
a cover body (430) covering the mount opening to seal the tank body through the cover body (430).

41. The water softener of any of claims 34 to 38, wherein a valve cavity (111) is provided inside the valve body (110) provided with a water inlet pipe (112), a water outlet pipe (113), a tank inlet pipe (114) and a tank outlet pipe (115), each communicating with the valve cavity (111), a valve seat (116) provided inside the valve cavity (111); and
the valve core assembly (140) is provided at the valve seat (116) and is located inside the valve cavity (111), the valve core assembly (140) switches among a service position, a salt adsorption position, a bypass position, a backwash position and a water replenishment position with respect to the valve seat (116), and the valve core assembly (140) and the valve seat (116) form a service water path, a salt adsorption water path, a bypass water path, a backwash water path and a water replenishment water path.

42. The water softener of claim 41, wherein an outer peripheral wall of the valve seat (116) and an inner peripheral wall of the valve cavity (111) form a first water inlet cavity (130), the valve seat (116) provided with a tank inlet cavity (131) and a second water inlet cavity (132) separated from each other, the tank inlet cavity (131) communicating with the tank inlet pipe (114), the water inlet pipe (112) communicating with both the first water inlet cavity (130) and the second water inlet cavity (132); and
the valve seat (116) is provided with a bypass cavity (133) communicating with the water outlet pipe (113), and the bypass cavity (133) is separated from the second water inlet cavity (132).

43. The water softener of claim 42, wherein the water outlet pipe (113) communicates with the tank outlet pipe (115) via a bypass check valve (137), the tank outlet pipe (115) unidirectionally communicating with the water outlet pipe (113); and
a position where the bypass cavity (133) communicates with the water outlet pipe (113) is between the bypass check valve (137) and an outlet of the water outlet pipe (113).

44. The water softener of any of claims 41 to 43, wherein a wastewater discharge control assembly (250) and a wastewater discharge water path are provided inside the transit connection assembly (200), the wastewater discharge control assembly (250) provided in the wastewater discharge water path, the wastewater discharge control assembly (250) configured to control on and off of the wastewater discharge water path, the transmission mechanism (141) comprising:
a driving gear (1432) provided at an output end of the driving portion (142);
a driven gear (1431) meshing with the driving gear (1432), wherein the driven gear (1431) is provided with at least one driving block (1433) configured to fit with the wastewater discharge control assembly (250) to open the wastewater discharge water path; and
a rotating shaft (150) connected to the driven gear (1431),
wherein the rotating shaft (150) is connected to the valve core assembly (140) to drive the valve core assembly (140) to switch water paths.

45. The water softener of claim 44, wherein the valve core assembly (140) comprises:
a moving plate (160) fixedly connected to the rotating shaft (150), wherein the rotating shaft (150) drives the moving plate (160) to rotate, the moving plate (160) provided at the valve seat (116), the moving plate (160) fitting with the valve seat (116) to form the service water path, the salt adsorption water path, the bypass water path, the backwash water path and the water replenishment water path.

46. The water softener of claim 45, wherein the moving plate (160) is provided with a moving water inlet hole (161) and a moving bypass hole (162) separated from each other;
at the service position, the first water inlet cavity (130) and the second water inlet cavity (132) communicate with the tank inlet cavity (131) through the moving water inlet hole (161), and the first water inlet cavity (130), the second water inlet cavity (132), the moving water inlet hole (161) and the tank inlet cavity (131) form the service water path; and
at the bypass position, the first water inlet cavity (130) and the second water inlet cavity (132) communicate with the bypass cavity (133) through the moving bypass hole (162), and the first water inlet cavity (130), the second water inlet cavity (132), the moving bypass hole (162) and the bypass cavity (133) form the bypass water path.

47. The water softener of claim 46, wherein a surface of the moving plate (160) facing away from the valve seat (116) is provided with a water inlet channel (163), one end of the water inlet channel (163) communicating with the moving water inlet hole (161), the other end of the water inlet channel (163) communicating with the first water inlet cavity (130).

48. The water softener of claim 47, wherein the water inlet channel (163) communicates with the first water inlet cavity (130) through multiple communication ports (164), the multiple communication ports (164) spaced apart along a circumferential direction of the moving plate (160).

49. The water softener of any of claims 46 to 48, wherein the valve seat (116) is provided with a salt adsorption cavity (134) and a salt adsorption communication cavity (135) separated from each other;
the moving plate (160) is provided with a moving salt adsorption and water distribution hole (165), the moving salt adsorption and water distribution hole (165) is provided at a surface of the moving plate (160) facing the valve seat (116), the moving water inlet hole (161) penetrates through the moving plate (160) along a thickness direction of the moving plate (160), and the moving salt adsorption and water distribution hole (165) is separated from the moving water inlet hole (161);
at the salt adsorption position, the moving water inlet hole (161) communicates with the moving salt adsorption and water distribution hole (165) through the salt adsorption communication cavity (135), the moving salt adsorption and water distribution hole (165) communicates with the salt adsorption cavity (134) and the bypass cavity (133), the moving water inlet hole (161), the salt adsorption communication cavity (135), the moving salt adsorption and water distribution hole (165) and the salt adsorption cavity (134) form the salt adsorption water path, and the moving water inlet hole (161), the salt adsorption communication cavity (135), the moving salt adsorption and water distribution hole (165) and the bypass cavity (133) form the bypass water path.

50. The water softener of any of claims 46 to 49, wherein the wastewater discharge water path selectively communicates with the tank outlet pipe (115), the wastewater discharge water path communicating with the tank outlet pipe (115) at the salt adsorption position.

51. The water softener of claim 49, wherein the salt adsorption cavity (134) selectively communicates with a salt box (500); and
at the salt adsorption position:
the salt adsorption cavity (134) communicates with the salt box (500), the soft water valve (100) being in a salt adsorption mode; and
the salt adsorption cavity (134) is disconnected from the salt box (500), the soft water valve (100) being in a slow wash mode.

52. The water softener of any of claims 49 to 51, further comprising a jet pipe (181) connected to the valve body (110), the jet pipe (181) communicating with the salt adsorption cavity (134).

53. The water softener of claim 52, wherein the valve seat (116) is provided with a water replenishment cavity separated from the salt adsorption cavity (134), the water replenishment cavity communicating with a water replenishment pipe, a salt adsorption check valve (260) provided between the water replenishment pipe and the jet pipe (181), the salt adsorption check valve (260) being unidirectionally communicated based on a pressure difference between the water replenishment pipe and the jet pipe (181); and
at the water replenishment position, the moving water inlet hole (161) communicates with the water replenishment cavity and the salt adsorption cavity (134), the pressure difference between the water replenishment pipe and the jet pipe (181) is zero, the salt adsorption cavity (134) replenishes water into the salt box (500) through the jet pipe (181), and the moving water inlet hole (161), the water replenishment cavity, the salt adsorption cavity (134), and the jet pipe (181) form the water replenishment water path.

54. The water softener of any of claims 46 to 53, wherein the moving plate (160) is provided with a moving backwash hole (166) penetrating through the moving plate (160) along a thickness direction of the moving plate (160), a backwash cavity (136) provided inside the valve seat (116), the valve body (110) provided with a backwash pipe (182) communicating with the backwash cavity (136); and
at the backwash position, the backwash cavity (136) communicates with the moving bypass hole (162), and the moving backwash hole (166) communicates with the bypass cavity (133), to form the backwash water path.

55. The water softener of any of claims 46 to 54, wherein the valve core assembly (140) further comprises:
a fixed plate (170) attached to the valve seat (116), wherein the moving plate (160) is rotatable with respect to the fixed plate (170), the fixed plate (170) provided with a fixed bypass hole (171) corresponding to and communicating with the bypass cavity (133), the moving plate (160) fitting with the fixed plate (170) and the valve seat (116) to form the service water path, the salt adsorption water path, the bypass water path, the backwash water path and the water replenishment water path.

56. The water softener of claim 55, wherein a seal washer (180) is provided between the fixed plate (170) and the valve seat (116), the seal washer (180) being the same as the fixed plate (170) in shape.

57. The water softener of claim 55 or 56, wherein an inner wall of the valve cavity (111) is provided with a first fixing portion (1111), a periphery of the fixed plate (170) provided with a second fixing portion (172), the second fixing portion (172) snapped with the first fixing portion (1111) to limit the fixed plate (170) in a circumferential direction, wherein one of the second fixing portion (172) or the first fixing portion (1111) is a slot body, and another of the second fixing portion (172) or the first fixing portion (1111) is a protrusion.

58. The water softener of any of claims 46 to 57, wherein the driving portion (142) comprises:
a driving motor fixedly connected to the valve body (110), an output end of the driving motor fixedly connected to the driving gear (1432).

59. The water softener of any of claims 46 to 58, wherein the valve body (110) comprises:
a valve body portion, wherein the valve cavity (111) is provided inside the valve body portion, a side of the valve cavity (111) being open; and
a valve plug cover (118) covering an open end of the valve cavity (111), the rotating shaft (150) penetrating through the valve plug cover (118), the driven gear (1431) located outside the valve cavity (111).

60. The water softener of claim 59, wherein the valve body (110) further comprises a control panel (119) sleeved at the rotating shaft (150), wherein the control panel (119) is located between the valve plug cover (118) and the driven gear (1431), the control panel (119) provided with a Hall sensor (1191), the driven gear (1431) provided with a magnetic member, the Hall sensor (1191) configured to sense a position of the magnetic member.

61. The water softener of any of claims 46 to 60, wherein the rotating shaft (150) comprises a vertical shaft (151) and a connecting disk (152), one end of the vertical shaft (151) connected to the driving portion (142), the connecting disk (152) provided at the other end of the vertical shaft (151), the connecting disk (152) stacked with and fixedly connected to the moving plate (160).

62. The water softener of claim 61, wherein the connecting disk (152) is provided with a first engaging portion (153), the moving plate (160) provided with a second engaging portion (167) fitting with the first engaging portion (153), wherein one of the first engaging portion (153) or the second engaging portion (167) is a slot body, and the other one of the first engaging portion (153) or the second engaging portion (167) is a protrusion.

63. The water softener of claim 52, wherein the transit connection assembly (200) further comprises:
a transit connection integration seat (210), wherein a first flow path (2101), a second flow path (2102), a salt mixing flow path (2103), a backwash flow path (2104) and a transit connection cavity (2105) are provided inside the transit connection integration seat (210), wherein an outer peripheral side of the transit connection integration seat (210) corresponding to each flow path is provided with a transit connection port;
one end of the first flow path (2101) communicates with the tank inlet pipe (114) through the corresponding transit connection port, and the other end of the first flow path (2101) communicates with the first connecting end port (330) through the corresponding transit connection port; and
one end of the second flow path (2102) communicates with the tank outlet pipe (115) through the corresponding transit connection port, one end of the salt mixing flow path (2103) communicates with the jet pipe (181), one end of the backwash flow path (2104) communicates with the backwash pipe (182), and the other end of the second flow path (2102), the other end of the salt mixing flow path (2103) and the other end of the backwash flow path (2104) are all connected to the second connecting end port (340) through the transit connection cavity (2105).

64. The water softener of any of claims 46 to 63, wherein the wastewater discharge control assembly (250) comprises a wastewater discharge pressure rod (251) provided with an extrusion end (2511) and a fit seal end (2512) axially arranged, and the extrusion end (2511) is located inside the driven gear (1431) and fittable with the driving block (1433) to be extruded, the fit seal end (2512) located in the wastewater discharge water path, the extrusion end (2511) configured to cause the fit seal end (2512) to move and open the wastewater discharge water path after being extruded.

65. The water softener of claim 63, wherein the transit connection integration seat (210) further comprises a salt adsorption flow path (2106), one end of the salt adsorption flow path (2106) communicating with the salt box (500), the other end of the salt adsorption flow path (2106) communicating with the salt mixing flow path (2103), both the salt adsorption flow path (2106) and the salt mixing flow path (2103) connected at a front end of the transit connection cavity (2105).

66. The water softener of any of claims 34 to 65, wherein the transit connection assembly (200) further comprises a jet injector (240) provided at a junction of the salt adsorption flow path (2106) and the salt mixing flow path (2103), the jet injector (240) being able to adsorb salt water into the salt mixing flow path (2103).

67. The water softener of any of claims 34 to 66, wherein the transit connection assembly (200) further comprises the salt adsorption check valve (260), the salt adsorption check valve (260) provided inside the transit connection cavity (2105) and located at a terminal end of the salt mixing flow path (2103).
